(19) **Europäisches Patentamt**
**European Patent Office**
**Office européen des brevets**

(11) **EP 2 565 489 B1**

(12) **EUROPEAN PATENT SPECIFICATION**

(45) Date of publication and mention
of the grant of the patent:
**25.05.2016 Bulletin 2016/21**

(51) Int Cl.:
*B23K 101/06* (2006.01)       *B23K 26/00* (2014.01)
*B62D 21/15* (2006.01)       *C21D 8/10* (2006.01)
*C21D 1/09* (2006.01)       *C21D 1/38* (2006.01)
*F16F 7/12* (2006.01)

(21) Application number: **11820038.5**

(22) Date of filing: **26.08.2011**

(86) International application number:
**PCT/JP2011/069289**

(87) International publication number:
**WO 2012/026578 (01.03.2012 Gazette 2012/09)**

(54) **SHOCK-ABSORBING MEMBER**

STOSSDÄMPFUNGSELEMENT

ELÉMENT AMORTISSANT LES CHOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2010 JP 2010189737
26.08.2010 JP 2010189502**

(43) Date of publication of application:
**06.03.2013 Bulletin 2013/10**

(73) Proprietor: **Nippon Steel & Sumitomo Metal
Corporation
Tokyo 100-8071 (JP)**

(72) Inventors:
• **KUWAYAMA Takuya
Tokyo 100-8071 (JP)**
• **SUZUKI Noriyuki
Tokyo 100-8071 (JP)**

• **MIYAZAKI Yasunobu
Tokyo 100-8071 (JP)**
• **KAWASAKI Kaoru
Tokyo 100-8071 (JP)**
• **YONEMURA Shigeru
Tokyo 100-8071 (JP)**

(74) Representative: **Vossius & Partner
Patentanwälte Rechtsanwälte mbB
Siebertstrasse 3
81675 München (DE)**

(56) References cited:
**JP-A- 10 244 955       JP-A- H07 119 892
JP-A- 2001 158 377       JP-A- 2002 173 055
JP-A- 2004 108 541       JP-A- 2004 108 541
JP-A- 2004 114 912       JP-A- 2004 114 912
JP-A- 2008 001 135       JP-A- 2010 173 422
JP-A- 2010 173 422**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an impact-absorbing member having a thermal treatment with laser light applied thereto.
The present application claims priority based on Japanese Patent Application No. 2010-189737 filed in Japan on August 26,2010, and Japanese Patent Application No. 2010-189502 filed in Japan on August 26, 2010.

Background Art

As an impact-absorbing member, tubular press-formed parts having polygonal cross-section are commonly used in automobiles or other vehicles. In general, the impact-absorbing member is used in two applications. First, the impact-absorbing member forms, for example, an engine compartment and trunk room, and is crumpled when the automobile collides so as to absorb the impact energy. Second, the impact-absorbing member forms, for example, a cabin, and prevents the cabin from deforming when the automobile collides from the viewpoint of securing the survival space of a passenger.
The strength of the impact-absorbing member can be enhanced by increasing the cross sectional dimensions or wall thickness of the impact-absorbing member. With this method, however, the volume or weight of the impact-absorbing member also increases, which leads to a deterioration in fuel efficiency as well as an increase in damage to the opposing vehicle at the time of a vehicle-to-vehicle collision.
Various methods have been proposed to partially enhance the strength of the impact-absorbing member by partially applying a laser thermal treatment to the impact-absorbing member, which is a press-formed part (for example, Patent Documents 1 to 4). In this application, the laser thermal treatment is a treatment in which a laser beam having a high energy density is emitted to an untreated impact-absorbing member to locally heat the impact-absorbing member to a transformation temperature or melting point or more, and then, the impact-absorbing member is quench hardened through an self cooling mechanism.
For example, Patent Document 1 discloses a method of enhancing the strength of a press-formed item by locally applying a thermal treatment to the press-formed item using a laser. More specifically, in Patent Document 1, after a steel sheet is cold formed, the steel sheet is rapid heated with a laser beam to a predetermined temperature or more in a striped form or a lattice form. Then, the heated steel sheet is cooled, thereby strengthening the press-formed item that has been cold formed. With this method, the occurrence of distortion after the thermal treatment can be suppressed as compared with a case where the thermal treatment is uniformly applied to a press-formed item. In particular, with the method disclosed in Patent Document 1, the laser thermal treatment is applied onto the external surface of the press-formed item in the striped form in the longitudinal direction, or onto the entire external surface of the press-formed item in a lattice form.
Patent Document 2 discloses a method of locally applying a thermal treatment to a press-formed item for the purpose of enhancing the strength of the press-formed item while suppressing the occurrence of the distortion. In particular, with the method disclosed in Patent Document 2, the thermal treatment is applied to a portion of the press-formed item that requires a strength, for example, is applied to a highly stressed portion, which is obtained from analysis of a vehicle crash test or a finite element method. More specifically, the laser thermal treatment is applied to the press-formed item in a streaked form or in a lattice form extending over the entire length in the longitudinal direction of the press-formed item.
Patent Document 3 discloses a method of using a steel sheet containing a specific component and applying a laser thermal treatment to the steel sheet. With this method, it is possible to enhance the strength of a portion subjected to the laser thermal treatment while maintaining workability of the steel sheet. The method disclosed in Patent Document 3 applies the laser thermal treatment to a portion that requires enhanced strength, and more specifically, applies the laser thermal treatment to the press-formed item in a straight form extending over the entire length in the longitudinal direction of the press-formed item.
Patent Document 4 discloses a method of applying a laser thermal treatment on an outer peripheral surface of the press-formed item in a line form along a direction in which a compressive load is applied, for the purpose of enhancing an impact-energy absorbing ability of the press-formed item. With this method, the laser thermal treatment is applied in the direction same as the direction in which an impact load is inputted. This method makes it possible to increase resistance against deformation, and to cause a crumple mode to occur regularly. In particular, the method disclosed in Patent Document 4 continuously applies the thermal treatment with laser light to the entire length of the press-formed item in the longitudinal direction along the direction in which the impact load is inputted. Patent Document D5 discloses a similar device.
In other words, with any of the methods disclosed in Patent Documents 1 to 5, the laser thermal treatment is applied to a portion of the external surface of the press-formed item that requires the strength. More specifically, the laser thermal treatment is applied in the line form extending continuously over the entire length of the press-formed item in the longitudinal direction, or the thermal treatment is applied with the laser light in the lattice form or other form over the entire external surface of the press-formed item.

Related Art Documents

Patent Documents

Patent Document 1: Japanese Unexamined Patent Application, First Publication No. S61-99629
Patent Document 2: Japanese Unexamined Patent Application, First Publication No. H04-72010
Patent Document 3: Japanese Unexamined Patent Application, First Publication No. H06-73439
Patent Document 4: Japanese Unexamined Patent Application, First Publication No. 2004-108541
patent document 5: JP 2010 73 422

**Disclosure of the Invention**

**Problems to be Solved by the Invention**

As described above, by applying the laser thermal treatment to the impact-absorbing member, it is possible to locally enhance the strength of the impact-absorbing member. However, the cost required for the laser thermal treatment increases with the increase in the area of the impact-absorbing member to which the laser thermal treatment is applied. Thus, for example, in the case of the impact-absorbing member having reduced deformation at the time when the impact energy is applied as described above, it is necessary to reduce the amount of deformation of the impact-absorbing member while reducing the area to which the laser thermal treatment is applied.

With the impact-absorbing member exhibiting reduced deformation, the amount of deformation in the direction of compression largely varies depending on the deformation mode in crump deformation when the impact energy is applied to the impact-absorbing member in the direction of compression (in the longitudinal direction of the impact-absorbing member). The deformation mode as described above generally includes two deformation modes: a compact mode and a non-compact mode.

In the deformation mode named the so-called compact mode, the impact-absorbing member largely bends and distorts when the impact energy is applied to the impact-absorbing member, and local folding does not occur. As a result, the entire impact-absorbing member deforms in a folded manner. In the deformation mode named the so-called non-compact mode, when the buckling occurs as the impact energy is applied to the impact-absorbing member, the folding of the impact-absorbing member is limited to local portions, and deformation of the impact-absorbing member scarcely occurs between the folded portions. As a result, a portion located between the folded portions remains flat.

With the non-compact mode, the impact-absorbing member crumples and deforms in a manner such that the portion remaining flat does not resist against the impact energy. This results in an increase in the amount of compressive deformation due to the impact energy applied in the direction of compression. On the other hand, with the compact mode, no flat part exists, and the entire impact-absorbing member resists against the impact energy. This results in a relatively small amount of compressive deformation caused by the impact energy applied in the direction of compression.

Further, the impact energy to the impact-absorbing member is not necessarily applied in the direction of compression, and is frequently applied both in the compression direction component and in the shearing direction (in a direction perpendicular to the longitudinal direction of the impact-absorbing member) component. The case where the impact energy having both the compression direction component and the shearing direction component is applied to the impact-absorbing member as described above includes: a case that the impact energy is applied to the impact-absorbing member, for example, in the diagonal direction; and a case that the impact-absorbing member itself is formed in a partially curved shape. In the case where the impact energy is applied to the impact-absorbing member in a direction having both the compression direction component and the shearing direction component as described above, the impact-absorbing member exhibits more complicated deformation behavior than the deformation in the compact mode.

In order to reduce the amount of deformation of the impact-absorbing member while reducing the area to which the laser thermal treatment is applied, it is necessary to determine portions where the laser thermal treatment is applied while considering the deformation behavior of the impact-absorbing member. However, basically, Patent Documents 1 to 4 do not take the deformation behavior of the impact-absorbing member into consideration to determine the portions where the laser thermal treatment is applied. Thus, the laser thermal treatment is not efficiently applied.

In view of the problems described above, an object of the the present invention is to provide an impact-absorbing member exhibiting reduced amount of deformation at the time of the impact energy being inputted while the amount of application of the laser thermal treatment is being reduced, by applying the laser thermal treatment while taking the deformation behavior of the impact-absorbing member into consideration.

Means for Solving the Problems

The present inventors examined deformation behavior of an impact-absorbing member when an impact energy having both components of the compression direction and the shearing direction is applied to the impact-absorbing member, and also examined a relationship between the amount of deformation of the impact-absorbing member at the time of the impact energy being applied and portions where a laser thermal treatment is applied to an untreated impact-absorbing member on the basis of the deformation behavior.

As a result, when the impact energy having both components of the compression direction (in a direction in which the impact-absorbing member extends) and the shearing direction is applied to the impact-absorbing member, the compressive deformation in the compact mode as described above occurs due to the impact energy in the direction of compression. Further, the present inventors found that crinkled-form buckling occurs on a surface of a structural member according to deformation cycles of the compact mode due to the impact energy in the shearing direction. Yet further, the present inventors found that, in order to suppress the occurrence of the crinkled-form buckling on the surface of the impact-absorbing member, it is effective to apply the laser thermal treatment by considering the deformation cycles.

The present invention has been made on the basis of the findings described above, and main points of the present invention are as follows:

(1) An impact-absorbing member according to one aspect of the present invention includes a tubular body having a polygonal shape in cross-section perpendicular to a longitudinal direction of the tubular body, the tubular body including plural flat portions and plural corner portions provided between the flat portions, in which at least one of the plural flat portions has a thermally-treated portion formed by applying a thermal treatment with laser light so as to deform at an angle of not less than 0.1 degrees and not more than 3.0 degrees.

(2) According to the impact-absorbing member of (1) above, it is preferable that each of the flat portions be separated into a plurality of quadrilateral partial flat portions adjacent to each other when the tubular body is divided by sections perpendicular to the longitudinal direction arranged in the longitudinal direction at $L/2$ intervals from a vertical section located at a predetermined position along the longitudinal direction from an end portion in the longitudinal direction of the tubular body, where $L$ is an average side length of all the sides constituting the polygonal shape at the end portion, and the thermally-treated portion is formed along at least one diagonal direction of at least one partial flat portion of the partial flat portions.

(3) According to the impact-absorbing member of (2) above, it is preferable that the predetermined position be located at the end portion.

(4) According to the impact-absorbing member of (2) above, it is preferable that the predetermined position be located at $L/4$ from the end portion along the longitudinal direction.

(5) According to the impact-absorbing member of any one of (2) to (4) above, it is preferable that the thermally-treated portion be provided to at least two partial flat portions adjacent to each other of the partial flat portions so as to be symmetric with respect to a boundary line between the adjacent partial flat portions.

(6) According to the impact-absorbing member of any one of (2) to (4) above, it is preferable that two thermally-treated portions be formed along both diagonal directions of at least one partial flat portion of the partial flat portions.

(7) According to the impact-absorbing member of any one of (1) to (4) above, it is preferable that another thermally-treated portion be further formed at the plural corner portions by applying a thermal treatment with laser light along the longitudinal direction of the tubular body.

(8) According to the impact-absorbing member of any one of (1) to (4) above, it is preferable that the thermally-treated portion be formed along the longitudinal direction of at least one flat portion of the flat portions.

(9) According to the impact-absorbing member of (8) above, it is preferable that the thermally-treated portion be formed with plural laser lights along the longitudinal direction.

(10) According to the impact-absorbing member of (8) above, it is preferable that the thermally-treated portion be formed so as to reach a depth of not more than three-quarter of a plate thickness of the flat portion from a surface of the flat portion.

(11) According to the impact-absorbing member of (8) above, it is preferable that the thermally-treated portion be formed so as to reach a depth of not less than $1/2$ of a plate thickness of the flat portion from a surface of the flat portion.

Effects of the Invention

According to the present invention, it is possible to reduce the amount of deformation of an impact-absorbing member when an impact energy is applied, while reducing the amount of laser thermal treatment, by applying a thermal treatment with laser light while taking deformation behavior of the impact-absorbing member into consideration.

Brief Description of the Drawings

FIG. 1A is a perspective view illustrating an impact-absorbing member according to a first embodiment of the present invention.

FIG. 1B is an enlarged sectional view illustrating a main part of the impact-absorbing member illustrated in FIG. 1A.

FIG. 2A is a sectional view illustrating the same impact-absorbing member.

FIG. 2B is a sectional view illustrating a modification example of the impact-absorbing member according to the first embodiment.

FIG. 2C is a sectional view illustrating another modification example of the impact-absorbing member according to the first embodiment.

FIG. 3A is a diagram for explaining a deformation mode.

FIG. 3B is a diagram for explaining a deformation mode.

FIG. 4 is a diagram illustrating how the impact-absorbing member illustrated in FIG. 1 deforms in a compact mode.

FIG. 5A is a diagram illustrating the same impact-absorbing member before reception of an impact energy in the shearing direction.

FIG. 5B is a diagram illustrating how the same impact-absorbing member receives the impact energy in the shearing direction and deforms.

FIG. 6 is a diagram taken along the line VI-VI in FIG. 5B.

FIG. 7 is a diagram illustrating an impact-absorbing member according to a second embodiment of the present invention.

FIG. 8 is a diagram illustrating an impact-absorbing member according to a third embodiment of the present invention.

FIG. 9 is a diagram illustrating an impact-absorbing member according to a fourth embodiment of the present invention.

FIG 10 is a diagram illustrating a modification example of the impact-absorbing member according to the first embodiment.

FIG. 11 is a diagram illustrating how an impact-absorbing member according to a fifth embodiment of the present invention deforms in a compact mode.

FIG. 12 is a perspective view illustrating the impact-absorbing member according to the fifth embodiment.

FIG. 13A is a diagram illustrating a production process, for example, of an impact-absorbing member used in Examples.

FIG. 13B is a diagram illustrating a production process, for example, of an impact-absorbing member used in Examples.

FIG. 13C is a diagram illustrating a production process, for example, of an impact-absorbing member used in Examples.

FIG. 13D is a diagram illustrating a production process, for example, of an impact-absorbing member used in Examples.

FIG. 14A is a side view illustrating, for example, a structural-member assembled body used in Examples.

FIG. 14B is a plan view illustrating, for example, a structural-member assembled body used in Examples.

FIG. 15 is a diagram illustrating welded portions between the structural-member assembled body and a steel sheet used in Examples.

FIG. 16 is a perspective view illustrating a structural-member assembled body of Example 1 and Comparative Example 1.

FIG 17 is a perspective view illustrating a structural-member assembled body of Comparative Example 2 and Comparative Example 5.

FIG 18 is a perspective view illustrating a structural-member assembled body of Comparative Example 3 and Example 2.

FIG. 19 is a perspective view illustrating a structural-member assembled body of Example 3.

FIG. 20 is a perspective view illustrating one example of an impact-absorbing member according to a sixth embodiment of the present invention.

FIG 21 is an end view of the same impact-absorbing member.

FIG. 22 is an enlarged partial sectional view illustrating thermally hardened areas of the same impact-absorbing member.

FIG. 23 is a photograph showing that an impact-absorbing member crumples in the compact mode.

FIG. 24 is a photograph showing that an impact-absorbing member crumples in a non-compact mode.

FIG. 25A is an enlarged view illustrating a thermally-treated portion of the same impact-absorbing member.

FIG. 25B is a diagram illustrating deformation of the thermally-treated portion of the same impact-absorbing member.

FIG. 26A is a sectional view illustrating details of the impact-absorbing member illustrated in FIG. 21.

FIG. 26B is an enlarged sectional view illustrating a main part of the impact-absorbing member illustrated in FIG 26A.

FIG. 27 is a graph illustrating how buckling wavelength at the time of crumple changes according to changes in average side length.

Embodiments of the Invention

Hereinbelow, embodiments of the present invention will be described in detail with reference to the drawings. Note that, in the following description, the same constituent components are denoted by the same reference numerals.

[First Embodiment]

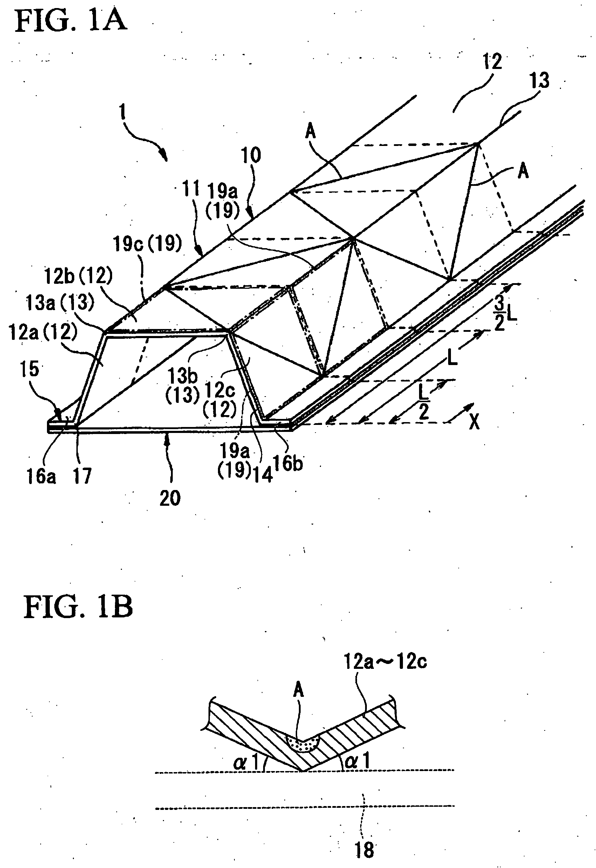

FIG 1A is a perspective view illustrating a first embodiment of an impact-absorbing member according to the present invention. As illustrated in FIG 1A, a structural-member assembled body 1 includes an impact-absorbing member 10 and an additional structural member 20, both of which are connected with each other. The impact-absorbing member 10 includes a partial tubular body (tubular body) 11 and a flange portion 15. The partial tubular body 11 is connected with plural flat portions 12 having a plate-like shape at plural comer portions 13 provided between the flat portions 12. In the example illustrated in FIG. 1A, the partial tubular body 11 has three flat portions 12a to 12c, and the flat portions 12a to 12c are connected with each other by way of two comer portions 13a and 13b.

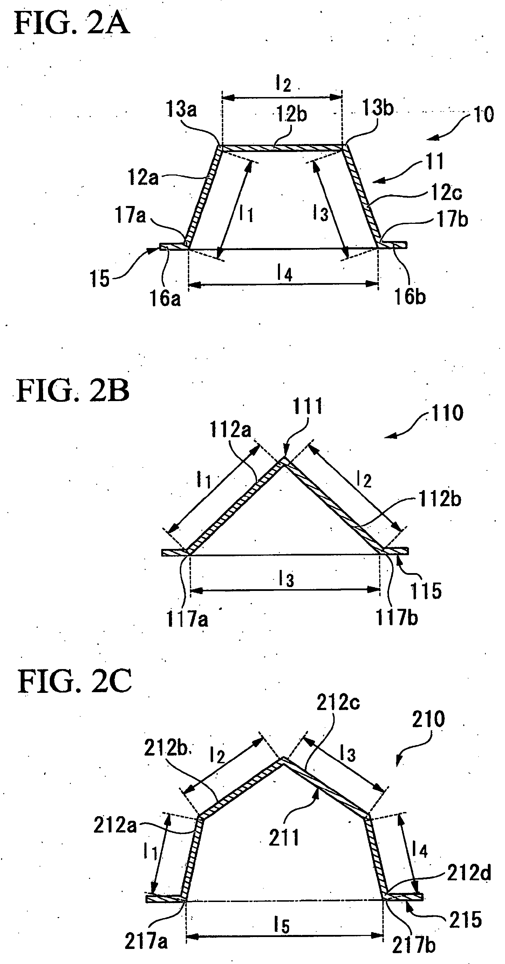

FIG. 2A is a sectional view taken along a plane perpendicular to the longitudinal direction of the structural-member assembled body 1 illustrated in FIG. 1A. As can be understood from FIG. 1A and FIG. 2A, the partial tubular body 11 of the impact-absorbing member 10 has a quadrilateral shape (polygon shape) with an open cross-section in which one side is opened in cross-section located at a plane perpendicular to a longitudinal direction of the partial tubular body 11 (hereinafter, referred to as "vertical section"). In other words, the three flat portions 12a to 12c of the partial tubular body 11 correspond to three sides of a quadrilateral cross-section of the partial tubular body 11.

The flange portion 15 of the impact-absorbing member 10 includes two flat portions 16a and 16b each extending from each edge of the partial tubular body 11 in cross section. The two flat portions 16a and 16b are connected with the partial tubular body 11 by way of comer portions 17a and 17b. The two flat portions 16a and 16b of the flange portion 15 are formed so as to extend outwardly from both edges of the partial tubular body 11 having the quadrilateral shape with one side being opened when viewed on a plane at which the open side of the quadrilateral is located.

As illustrated in FIG. 1A and FIG. 2A, the additional structural member 20 having a plate-like shape is placed so as to face the flange portion 15 of the impact-absorbing member 10 and close the opened side in the quadrilateral cross-section of the partial tubular body 11. The additional structural member 20 is jointed with the impact-absorbing member 10 by welding the flange portion 15 of the impact-absorbing member 10 with a portion of the additional structural member 20 that faces the flange portion 15. The impact-absorbing member 10 and the additional structural member 20 are used, for example, for a frame of a vehicle as the structural-member assembled body 1 in a state that these are jointed with each other.

The impact-absorbing member 10 and the additional structural member 20 are formed, for example, by a steel material or other material from which local quench hardening can be obtained by application of a laser thermal treatment. The term "laser thermal treatment" represents a treatment in which a laser beam having a high energy density is first emitted to an untreated impact-absorbing member to locally heat the untreated impact-absorbing member to a transformation temperature or melting point or more, and then, the heated impact-absorbing member is quench hardened through a self cooling mechanism. The impact-absorbing member 10 and the additional structural member 20 are formed into the above-described shapes by press forming or other general forming methods.

In this embodiment, the partial tubular body 11 of the impact-absorbing member 10 has a quadrilateral cross-sectional shape with one side being opened in the vertical section. However, it may be possible for the partial tubular body 11 to have any polygonal shape with one side being opened. Thus, for example, the partial tubular body 11 may have a triangle shape with one side being opened as illustrated in FIG. 2B, or may have a pentagonal shape with one side being opened as illustrated in FIG. 2C. In the case where the partial tubular body has a triangle cross-sectional shape with one side being opened in the vertical section as illustrated in FIG. 2B, the impact-absorbing member 110 includes a partial tubular body 111 having two flat portions connected by way of one comer portion, and a flange portion 115 having two flat portions connected with the partial tubular body 111 by way of two comer portions. In the case where the partial tubular body has a pentagonal cross-sectional shape with one side being opened in the vertical section as illustrated in FIG. 2C, the impact-absorbing member 210 includes a partial tubular body 211 having four flat portions connected by way of three comer portions, and a flange portion 215 having two flat portions connected with the partial tubular body 211 by way of two comer portions.

In this embodiment of the present invention, the laser thermal treatment is applied to a specific portion of the untreated impact-absorbing member 10 formed into the shapes as described above. Next, the portion subjected to the laser thermal treatment will be described.

In this embodiment, the portion subjected to the laser thermal treatment is determined on the basis of an average side length L in polygonal cross-section of one end portion (hereinafter, referred to as "longitudinal end portion") 14 in the longitudinal direction of the impact-absorbing member 10. In particular, in this embodiment, it is preferable that the one longitudinal end portion 14 is set to an end of the impact-absorbing member 10 to which an impact energy is expected to be applied when the structural-member assembled body 1 is actually used. Thus, for example, in the case where the structural-member assembled body 1 is used as a side frame (frame extending in the front and rear direction of the vehicle) for an engine compartment of an automobile, one end portion of the side frame located on the front side of the vehicle is the one longitudinal end portion described above. In the case where the structural-member assembled body 1 is used as a side frame for a trunk room of the automobile, one end portion of the side frame located on the rear side of the vehicle is the one longitudinal end portion. In this embodiment, the portion subjected to the laser thermal treatment is determined on the basis of the average side length L as described above. Thus, the average side length L will be described first.

The partial tubular body 11 of the impact-absorbing member 10 illustrated in FIG. 1A includes the one longitudinal end portion 14 having a quadrilateral cross-section with one side being opened as illustrated in FIG 2A. The characters 11 to 14 represent lengths of respective sides (including the opened side) constituting the quadrilateral cross section. In other words, the characters 11 to 14 represent lengths of respective sides on the assumption that the partial tubular body 11 of the impact-absorbing member 10 has a closed quadrilateral cross section. The average of the lengths 11 to 14 of the respective sides in this case is the average side length L (L = (11 + 12 + 13 + 14)/4).

Thus, for example, in the case where the impact-absorbing member has a cross-sectional shape as illustrated in FIG 2B, the average side length L is the average length L of the lengths 11 to 13 of three sides, and is (11 + 12 + 13)/3, where 11 is a length of a side of a flat portion 112a of the partial tubular body 111, 12 is a length of a side of a flat portion 112b, and 13 is a length from a corner portion 117a to a comer portion 117b, when the impact-absorbing member 110 is viewed from cross section.

Further; in the case where the impact-absorbing member 210 has a cross-sectional shape as illustrated in FIG. 2C, the average side length L is the average length L of lengths 11 to 15 of five sides, and is (11 + 12 + 13 + 14 + 15)/5, where 11 is a length of a side of a flat portion 212a of a partial tubular body 211,12 is a length of a side of a flat portion 212b, 13 is a length of a side of a flat portion 212c, 14 is a length of a side of a flat portion 212d, 15 is a length from a comer portion 217a to a comer portion 217b, when the impact-absorbing member 210 is viewed from cross section.

Thus, when these are summarized, the average side length L means an average length of all of the sides constituting the polygonal cross-sectional shape at the one longitudinal end portion of the partial tubular body of the impact-absorbing member having the polygonal cross-section with one side being opened.

In this embodiment, the impact-absorbing member 10 is separated by cross sections perpendicular to the longitudinal direction (vertical section including the broken line in FIG. 1A) and arranged in the longitudinal direction at intervals of L/2 from a vertical section located at a predetermined position (at the longitudinal end portion 14 in this embodiment) including the one longitudinal end portion 14 along the longitudinal direction. By separating the impact-absorbing member 10 as described above, each of the flat portions 12a to 12c located between the adjacent vertical sections is sectioned into plural quadrilateral partial flat portions 19 located adjacent to each other.

More specifically, when a is an integer, the partial flat portion 19 represents a quadrilateral portion of each of the flat portions located between a vertical section spaced away in the longitudinal direction from the one longitudinal end portion 14 by a distance (hereinafter, referred to as longitudinal distance) X of (a-1)L/2 and a vertical section located at a distance X of aL/2. Thus, each of the partial flat portions 19 means a portion indicated by the dot-and-dash line illustrated in FIG. 1A. Of the great number of the partial flat portions 19, only three partial flat portions 19a to 19c are illustrated in FIG. 1A.

In this embodiment, the laser thermal treatment is applied in the diagonal direction on the external surface side of each of the partial flat portions 19 having quadrilateral shape to form thermally-treated portions A extending in the diagonal direction. In particular, in the example illustrated in FIG 1A, the laser thermal treatment is applied in the straight manner from one comer of each of the quadrilateral partial flat portions 19 to a comer located on the opposite angle side to the one comer, thereby forming the thermally-treated portion A corresponding to this application. In this embodiment, YAG laser or fiber laser is used for the thermal treatment with the laser light.

Further, in this embodiment, the thermally-treated portions A provided to the adjacent partial flat portions 19 and extending in the diagonal direction are arranged so as to be symmetric with respect to a line located between the adjacent partial flat portions 19. For example, for a partial flat portion 19a and a partial flat portion 19b in FIG. 1A, which are next to each other, the thermally-treated portions A provided to the partial flat portions 19a and 19b are arrange (formed) so as to be symmetric with respect to a line located between the partial flat portions 19a and 19b (in other words, a line of intersection of the flat portion 12c and the vertical section plane with the longitudinal distance X of L/2). Further, for the partial flat portion 19a and a partial flat portion 19c in FIG. 1A, which are next to each other, the thermally-treated portions A provided to the partial flat portions 19a and 19c are arranged (formed) so as to be symmetric with respect to a line located between the partial flat portions 19a and 19b (in other words, a line along the comer portion 13b).

Further, as illustrated in FIG 1B, by applying laser hardening to the flat portions 12a to 12c as described above, the impact-absorbing member 10 deforms (bends) toward the center. In FIG. 1B, the broken line indicates a flat portion 18 before the thermal treatment, and the solid line indicates the flat portions 12a to 12c after the thermal treatment. As illustrated in FIG. 1B, an angle $\alpha 1$ formed by the flat portion 18 and the flat portions 12a to 12c (deformation angle of the thermally-treated portion A) is not less than 0.1 degrees and not more than 3.0 degrees. Preferably, the thermally treat portion A deforms at an angle of not less than 0.1 degrees and not more than 0.6 degrees. The thermally-treated portion has a width preferably in the range of 0.4t mm to 1.6t mm, and a depth in the thickness direction, preferably, at least in the range of 0.2t mm to 0.8t mm, where t is a thickness of the impact-absorbing member 10.

With this configuration, the impact-absorbing member 10 according to this embodiment has enhanced strength along the thermally-treated portion A formed so as to extend in the diagonal direction on the partial flat portions 19. Next, a description will be made of an effect of partially strengthening the impact-absorbing member 10 as described above.

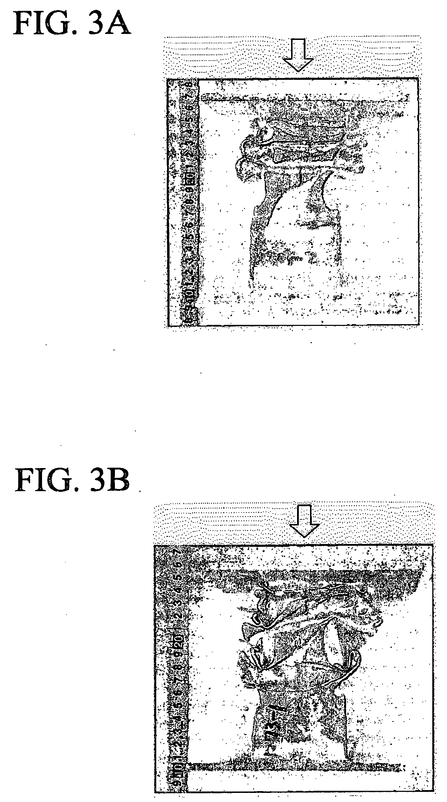

The impact-absorbing member deforms in a compact mode as illustrated in FIG. 3A or in a non-compact mode as illustrated in FIG 3B when an impact energy is applied in the longitudinal direction of the impact-absorbing member (extending direction), in other words, in the direction in which the impact-absorbing member compresses. Of the deformation modes, crumple deformation needs to occur in the compact mode from the viewpoint of suppressing the amount of compression of the impact-absorbing member. To cause the crumple deformation to occur in the compact mode, a crumple bead has been used or other various kinds of methods have been used, and it may be possible to employ any of the methods.

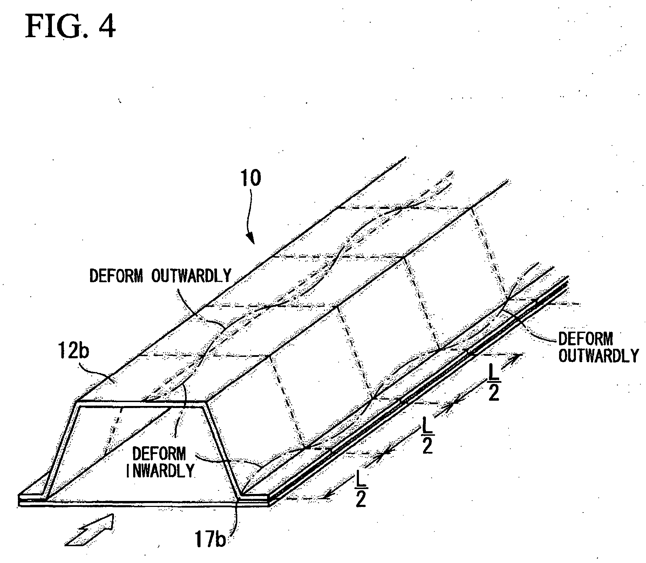

When the crumple deformation occurs in the compact mode, the impact-absorbing member crumples in a form such that a portion that dents inwardly and a portion that expands outwardly appear alternately. The present inventors found that a length cycle in which the impact-absorbing member dents inwardly once, then expands outwardly, and returns to the original position is almost equal to the average side length L at the end portion of the impact-absorbing member. This finding will be described with reference to FIG 4.

FIG. 4 illustrates how the impact-absorbing member 10 deforms in the compact mode in the case where the one longitudinal end portion 14 of the impact-absorbing member 10 illustrated in FIG. 1A is fixed to any other member and the impact energy is applied in a direction of the arrow in the drawing. In particular, the dot-and-dash lines in the drawing illustrate how the center of the flat portion 12b and the comer portion 17b deform. As can be understood from FIG. 4, in the case where the impact-absorbing member 10 deforms in the compact mode, the impact-absorbing member 10 dents inwardly in the region where the distance in the longitudinal direction is in the range of 0 to L/2, and expands outwardly in the region where the distance in the longitudinal direction is in the range of L/2 to L. Further, the impact-absorbing member 10 dents inwardly in the region where the distance in the longitudinal direction is in the range of L to 3L/2, and expands outwardly in the region where the distance in the longitudinal direction is in the range of 3L/2 to 2L. Thereafter, the impact-absorbing member 10 repeats the dent and expansion in a similar manner. This means that, in the case where the impact-absorbing member 10 deforms in the compact mode, the inward dent and the outward expansion repeats in the cycle L.

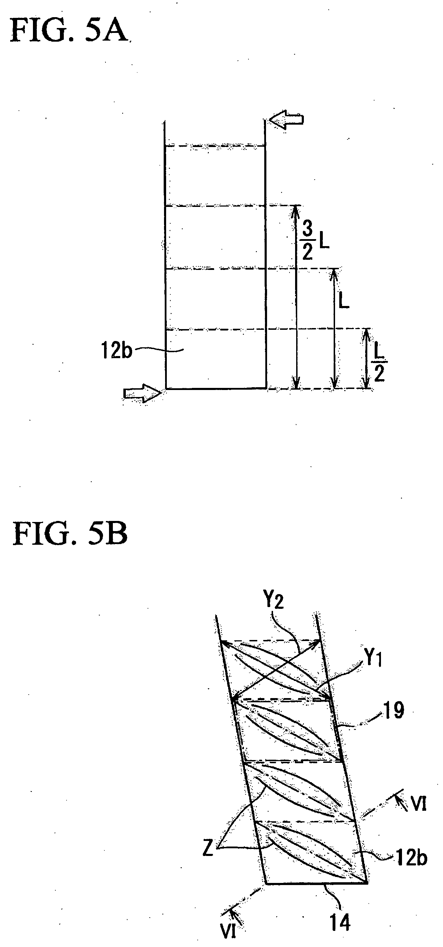

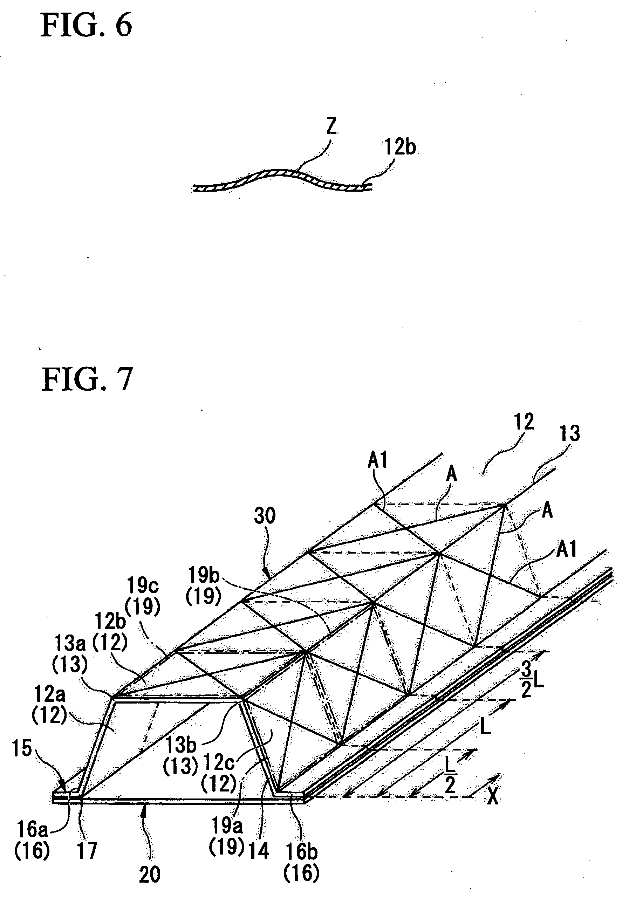

On the other hand, in the case where, in addition to the impact energy in the direction of compression, the impact energy in the shearing direction (in other words, the impact energy in a direction perpendicular to the longitudinal direction of the impact-absorbing member) is applied to the impact-absorbing member 10 as illustrated in FIG. 1A, the buckling in the crinkled form occurs to each of the partial flat portions 19 of the impact-absorbing member 10 in addition to the deformation in the compact mode. This phenomenon will be described with reference to FIG. 5A, FIG. 5B, and FIG. 6.

FIG. 5A and FIG. 5B are plan views illustrating one flat portion 12b of the impact-absorbing member 10. In particular, FIG. 5A illustrates the flat portion 12b before the impact energy in the shearing direction is applied, and FIG 5B illustrates the flat portion 12b after the impact energy in the shearing direction is applied. FIG. 6 is a sectional view illustrating the flat portion 12b taken along VI-VI in FIG. 5B.

In the case where the flat portion 12b of the impact-absorbing member 10 receives the impact energy in the direction of the arrow illustrated in FIG. 5A, in other words, in the shearing direction, the flat portion 12b deforms in a manner as illustrated in FIG. 5B. In this case, if the impact-absorbing member 10 deforms in the compact mode as illustrated in FIG. 4 due to the impact energy in the direction of compression, which is applied simultaneously with the impact energy in the shearing direction, the buckling Z in the crinkled form occurs to the flat portion 12b at L/2 cycle as illustrated in FIG. 5B. From a different viewpoint, the buckling Z in the crinkled form occurs to each of the partial flat portions 19 in a manner that it extends in the diagonal direction.

The largest tensile stress in the plane of the partial flat portion 19 acts in the diagonal direction (arrow Y1 in FIG. 5B), in which the buckling Z in the crinkled form occurs, whereas the largest compressive stress in the plane of the partial flat portion 19 acts in the diagonal direction (arrow Y2 in FIG 5B) that is different from the diagonal direction in which the buckling Z in the crinkled form occurs.

In connection with these stresses, for the impact-absorbing member 10 according to this embodiment, the laser thermal treatment is applied to each of the partial flat portions 19 in the diagonal direction to form the thermally-treated portion A extending in the diagonal direction. Thus, each of the partial flat portions 19 is strengthened in a direction in which the largest tensile stress acts or the largest compressive stress acts at the time when the buckling Z in the crinkled form occurs. With this application, according to this embodiment, it is possible to suppress the occurrence of the buckling Z in the crinkled form as described above, whereby it is possible to suppress the deformation of the impact-absorbing member 10.

In the example illustrated in FIG. 1A, the thermally-treated portion A provided to each of the partial flat portions 19 extends from one corner of the partial flat portion 19 to the other corner. However, it is not necessary that the thermally-treated portion A extends from corner to corner, provided that the thermally-treated portion A extends in the diagonal direction of each of the partial flat portion 19 having the quadrilateral shape. Thus, it is only necessary that the thermally-treated portion A partially extends in the diagonal direction only in the central area of each of the partial flat portion 19.

The laser thermal treatment is applied to the untreated impact-absorbing member 10 in a manner such that a targeted point of the laser light is moved in the diagonal direction on each of the partial flat portions 19. With this application, the laser thermal treatment is applied in a straight manner in the diagonal direction of each of the partial flat portions 19. Further, it may be possible that the number of lines of the straight application of the laser light to each of the partial flat portions 19 is set to any number, provided that at least one line is formed. Thus, the thermally-treated portion A may be formed by plural lines of the laser emission.

Further, in the example illustrated in FIG. 1A, the thermally-treated portion A is provided to all the partial flat portions 19. However, it is not necessary that the thermally-treated portion A is formed in all the partially flat portions 19. It is only necessary that the thermally-treated portion A is formed on at least one partial flat portion. Further, in this embodiment, the thermally-treated portion A is formed on the outer side of the impact-absorbing member 10. However, it may be possible to form the thermally-treated portion A on the inner side of the impact-absorbing member 10 (on the side facing the additional structural member 20).

[Second Embodiment]

In the first embodiment, the laser thermal treatment is applied in only one diagonal direction to each of the partial flat portion 19 having the quadrilateral shape to form the thermally-treated portion A extending in the one diagonal direction. In a second embodiment, the laser thermal treatment is applied in both diagonal directions to each of the partial flat portions 19 of an impact-absorbing member 30 as illustrated in FIG. 7 to form two thermally-treated portions A and A1 extending in both diagonal directions. With this application, it is possible to further suppress the deformation of the impact-absorbing member 30 caused by the shock energy occurring in the shearing direction.

Further, in this embodiment, although not illustrated, the flat portions 12a to 12c are deformed (bent) in a similar form to the impact-absorbing member 10 illustrated in FIG. 1B.

[Third Embodiment]

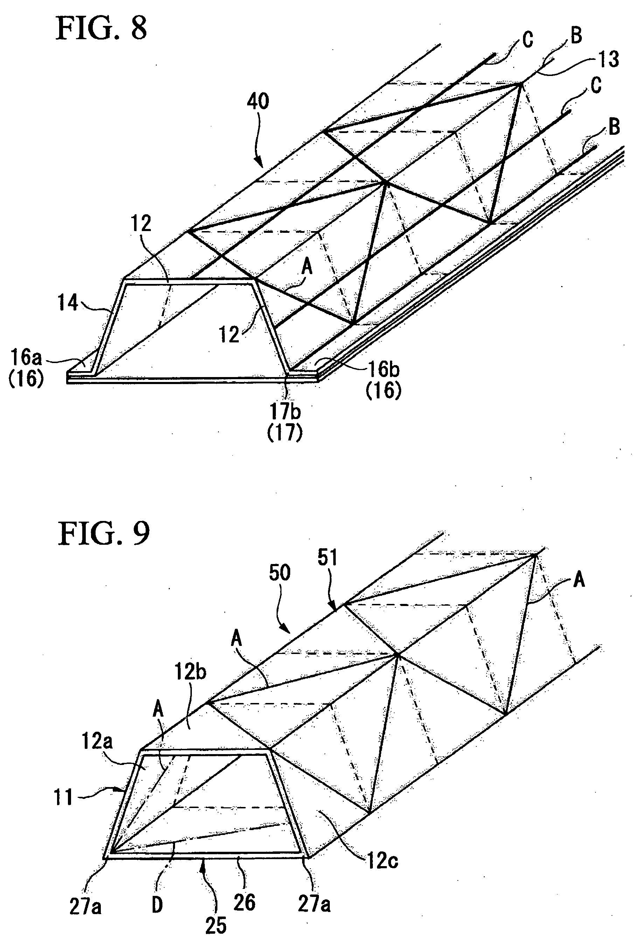

In the first embodiment, the thermally-treated portion A is formed in each of the partial flat portions 19 in the diagonal direction. In a third embodiment, in addition to the thermally-treated portion A, an impact-absorbing member 40 has at least one of thermal treated portions B and C formed so as to extend in the longitudinal direction of the impact-absorbing member 10 as illustrated, for example, in FIG. 8. More specifically, the thermally-treated portion (other thermally-treated portion) B may be formed in part or all of the corner portions 13, 17 extending in the longitudinal direction of the impact-absorbing member 40, or the thermally-treated portion C may be formed in part of the flat portions 12, 16. With this application, it is possible to suppress the deformation of the impact-absorbing member 40 caused by the shock energy in the shearing direction, and further, suppress the deformation of the impact-absorbing member 40 caused by the shock energy in the direction of compression.

Further, in this embodiment, although not illustrated, the flat portion 12 is deformed (bent) in a similar form to the impact-absorbing member 10 illustrated in FIG. 1B.

[Fourth Embodiment]

In the first embodiment, the impact-absorbing member 10 includes the partial tubular body 11 having the polygonal shape cross-sectional shape with an open cross-section in which one side is opened. However, similarly, the thermal treatment with the laser light is applied to an impact-absorbing member 50 having a polygonal shape with a closed cross-section in which the cross-sectional shape is closed as illustrated in FIG 9. More specifically, in addition to a partial tubular body 51 in the first embodiment, the impact-absorbing member 50 includes a flat portion 26 that closes an open side of the partial tubular body 51 having a polygonal cross-sectional shape, a corner portion 27a provided between the flat portion 26 and the flat portion 12a constituting the partial tubular body 51, and a corner portion 27b provided between the flat portion 26 and the flat portion 12c constituting the partial tubular body 51. The thermal treatment with the laser light is applied to the flat portions 12a to 12c of the impact-absorbing member 50 in a similar manner to the impact-absorbing member 10 described above. Further, as illustrated in FIG 9, the laser thermal treatment is applied to the flat portion 26 to form a thermally-treated portion D. In this embodiment, the dot-and-dash line in FIG 9 means that the laser thermal treatment is applied to a rear side of the flat portion.

Further, in this embodiment, although not illustrated, the flat portions 12a to 12c are deformed (bent) in a similar form to the impact-absorbing member 10 illustrated in FIG. 1B.

Further, in this embodiment, the impact-absorbing member has a cross-sectional shape in which its shape remains almost unchanged in the longitudinal direction. However, it may be possible that the impact-absorbing member does not have the cross-sectional shape in which its shape remains almost unchanged in the longitudinal direction. For example, this embodiment can be applied to an impact-absorbing member having a shape in which the cross-sectional shape gradually increases from the one longitudinal end portion 14, in other words, the cross-sectional shape gradually becomes wider with distance from the longitudinal end portion 14. Further, this embodiment can be applied to an impact-absorbing member in which the cross-sectional shape gradually reduces from the one longitudinal end portion 14, in other words, the cross-sectional shape contracts inwardly with distance from the longitudinal end portion 14.

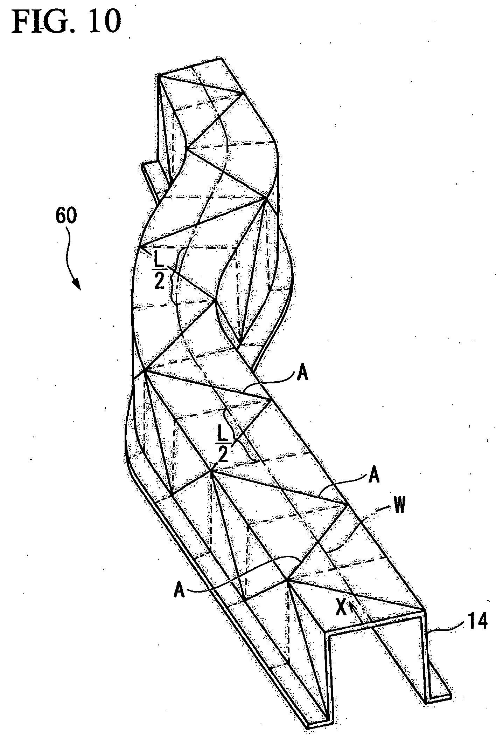

Further, an impact-absorbing member 60 may be curved or bent from the midpoint thereof as illustrated in an example in FIG 10. In this case, the longitudinal direction represents a direction along the central line W of the impact-absorbing member 60, and the interval of L/2 is determined on the basis of the length of the central line W. In particular, in the case where the impact-absorbing member 60 has a shape as described above, a force in the shearing direction acts on the impact-absorbing member 60 even if the impact energy in the longitudinal direction is applied to the longitudinal end portion 14 of the impact-absorbing member 60.

[Fifth Embodiment]

Next, a fifth embodiment of the present invention will be described.

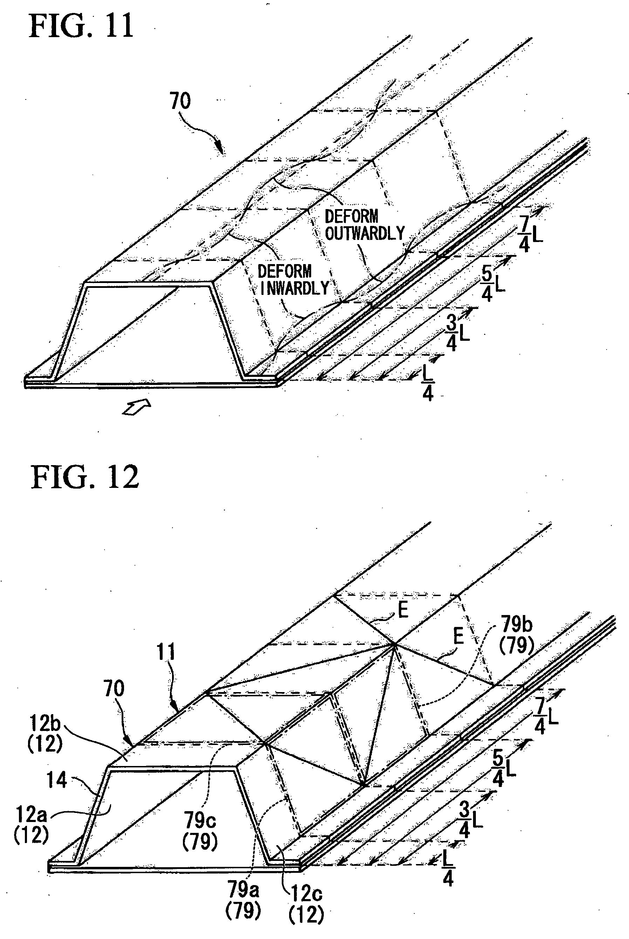

FIG. 4 illustrates a deformation mode in which the one longitudinal end portion 14 of the impact-absorbing member 10, in other words, the longitudinal end portion of the structural-member assembled body 1 is fixed to any other member. However, in the case where the one longitudinal end portion 14 of the impact-absorbing member 10 is not fixed to any other member and is formed as a free end, the impact-absorbing member 10 deforms in a different compact mode. FIG 11 illustrates this deformation mode.

FIG. 11 illustrates how the impact-absorbing member 70 deforms in the compact mode when the impact energy is applied in the direction of the arrow in FIG. 11 in the case where the one longitudinal end portion 14 of the impact-absorbing member 70 is formed as the free end. As can be understood from FIG. 11, when the impact-absorbing member 70 deforms in the compact mode in the case where the the one longitudinal end portion 14 of the impact-absorbing member 70 is formed as the free end, the impact-absorbing member 70 expands outwardly in the region where the distance X in the longitudinal direction is in the range of 0 to L/4, and the impact-absorbing member 70 dents inwardly in the region where the distance X is in the range of L/4 to 3L/4. Further, the impact-absorbing member 70 expands outwardly in the region where the distance X is in the range of 3L/4 to 5L/4, and the impact-absorbing member 70 dents inwardly in the region where the distance X is in the range of 5L/4 to 7L/4. Thereafter, the impact-absorbing member 70 repeats expansion and dent in a similar manner in the cycle L.

In view of the facts described above, in this embodiment, a thermally-treated portion E is formed in a position different from those in the embodiment described above. In this embodiment, the impact-absorbing member 70 is separated by vertical sections arranged in the longitudinal direction at intervals of L/2 (vertical section including the broken line in FIG. 12) and starting from a vertical section located at a position at which the longitudinal distance X is L/4. A partial flat portion 79 represents a quadrilateral portion of each of the flat portions 12a to 12c located between the adjacent vertical sections obtained by separating the impact-absorbing member 70 as described above. In other words, when a is an integer, the partial flat portion 79 represents a quadrilateral portion of each of the flat portions located between a vertical section located at a distance X in the longitudinal direction of (a/2 - 1/4)L and a vertical section located at a distance X of (a/2 + 1/4). Thus, the partial flat portion 79 represents a portion indicated by the dot-and-dash line in FIG 12. Note that, of the great number of partial flat portions 19, only three partial flat portions 79a, 79b, and 79c are illustrated in FIG 12.

Further, in this embodiment, the laser thermal treatment is applied in the diagonal direction on the external surface side of each of the partial flat portions 79 having the quadrilateral shape to form the thermally-treated portion E extending in the diagonal direction. In particular, in the example illustrated in FIG. 12, the laser thermal treatment is applied in the straight manner from one corner of each of the partial flat portions 79 having the quadrilateral shape to a corner located on the opposite angle side to form the thermally-treated portion E corresponding to this application. Yet further, in this embodiment, the thermally-treated portions E provided to the partial flat portions 79 adjacent to each other and extending in the diagonal direction are arranged so as to be symmetric with respect to a line located between the partial flat portions 79 adjacent to each other. In this embodiment, it may be possible to change the portions to which the thermal treatment with the laser light is applied, as is the case with the embodiments described above.

Further, in this embodiment, although not illustrated, the flat portions 12a to 12c are deformed (bent) in a similar form to the impact-absorbing member 10 illustrated in FIG 1B.

The first embodiment to the fifth embodiment can be summarized in the following manner. According to the present invention, the thermally-treated portion having the thermal treatment with the laser light applied thereto is formed on at least one of the plural flat portions so as to deform at an angle in the range of 0.1 degrees to 3.0 degrees. Further, it can be said that at least one partial flat portion has the thermally-treated portion having the thermal treatment applied thereto with the laser light and extending in at least one diagonal direction of the partial flat portion, where L is the average side length of all the sides constituting the polygonal cross-sectional shape at the one longitudinal end portion 14 of the impact-absorbing member, and the partial flat portion is a quadrilateral portion of each of the flat portions located between the adjacent vertical sections when the impact-absorbing member is separated by vertical sections arranged in the longitudinal direction at intervals of L/2 from a predetermined vertical section.

Examples

[Comparative Example 1]

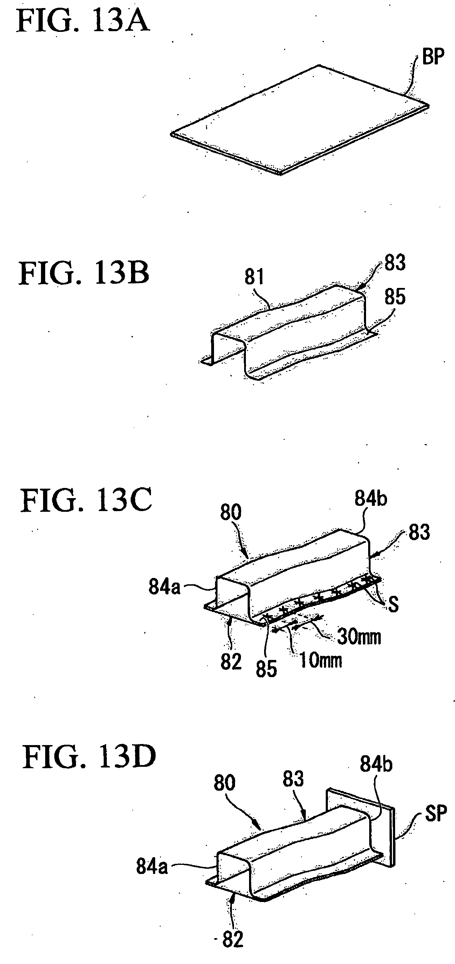

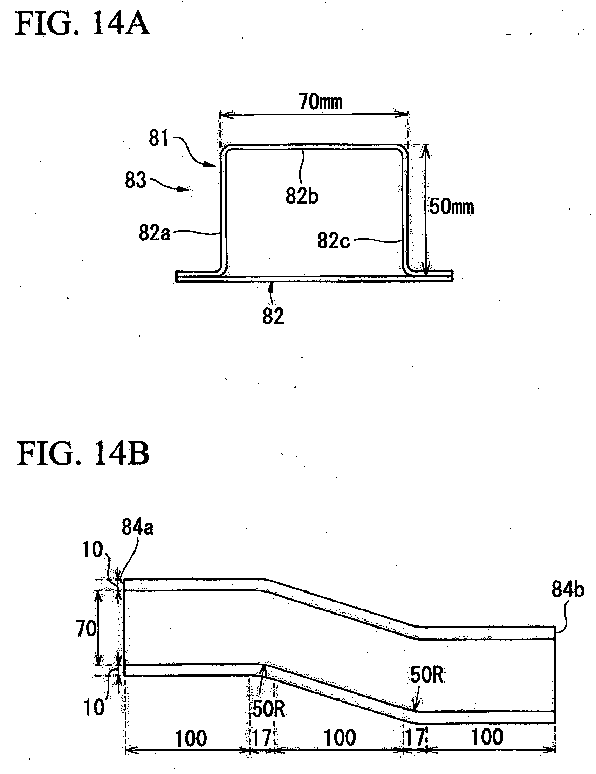

An impact-absorbing member 83 of Comparative Example 1 is a steel sheet BP with a 780 MPa class as illustrated in FIG. 13A. The steel sheet BP has a thickness of 1.6 mm, a yield stress of 493 MPa, a tensile strength of 844 MPa, an elongation of 27%, the amount of carbon contained of 0.19%, the amount of silicon contained of 1.20%, and the amount of manganese contained of 1.84%. This steel sheet BP was bent to produce the untreated impact-absorbing member 83 having a shape as illustrated in FIG. 13B. The untreated impact-absorbing member 83 includes a partial tubular body 81 having a quadrilateral cross-section with one side being opened. Side lengths of the vertical section formed by three flat portions constituting the partial tubular body 81 were set such that the length of the flat portion 82a was 50 mm, the length of the flat portion 82b is 70 mm, the length of the flat portion 82c was 50 mm, and the length of the opened side of the impact-absorbing member 83 was 70 mm as illustrated in FIG 14A. Thus, the average side length L of the untreated impact-absorbing member 83 was 60 mm.

Further, when the impact-absorbing member 83 was divided into three in the longitudinal direction (extending direction) from one end 84a toward the other end 84b as illustrated in a top view of FIG. 14B, the central portion of the impact-absorbing member 83 was formed so as to slant with respect to the other two end portions. Further, portions between the central portion and the two end portions were curved at 50R. Yet further, the length of each of the two end portions in the longitudinal direction was set to 100 mm, and the length of the central portion (length in the longitudinal direction of the two end portions) was set to 110 mm.

A planer additional structural member 82 was spot welded to a flange portion 85 of the untreated impact-absorbing member 83 as described above to produce a structural-member assembled body 80 as illustrated in FIG 13C. The spot welding S was applied to the widthwise center of the flat portion constituting the flange portion 85 and at 30 mm intervals in the longitudinal direction. Further, a distance from the end portion 84a (end portion where impact is to be applied, hereinafter, referred to as "end portion on the impact application side") to the first spot welding in the longitudinal direction was set to 10 mm.

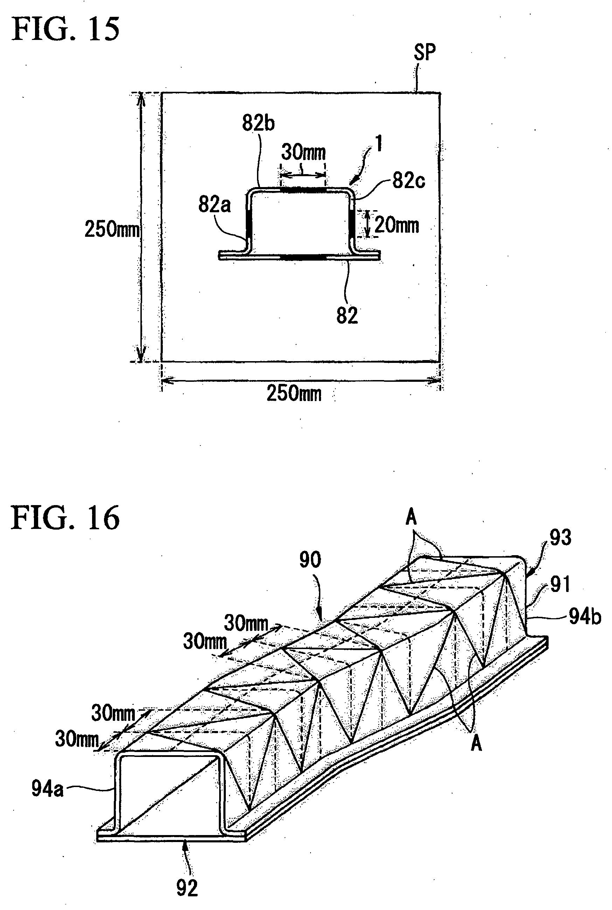

The other end portion 84b (end portion located on the opposite side to the side having impact to be applied, and hereinafter, referred to as "end portion on the impact not-application side") of the structural-member assembled body 80 produced as described above was MIG welded to the steel sheet SP having a thickness of 1.6 mm and a side length of 250 mm. The structural-member assembled body 80 and the steel sheet SP were not welded at the entire end surface of the structural-member assembled body 1, and were welded at the vicinity of the central portion of each side constituting the above-described quadrilateral cross-section among the end surfaces of the structural-member assembled body 80. For the flat portions 82a and 82c having a side length of 50 mm, MIG welding of 20 mm was applied at the central portion of the end surface of the flat portions 82a and 82c. For the additional structural member 20 and the flat portion 62b having a side length of 70 mm, MIG welding of 30 mm was applied to the central portion of the end surface of the flat portion 62b, and MIG welding of 30 mm was applied to the central portion of the end surface of the additional structural member 82 (blackened portion in FIG 15 illustrating a side view of the structural-member assembled body in FIG. 13D).

Further, in this Comparative Example 1, a steel sheet was MIG welded to the end portion on the impact application side of the structural-member assembled body 80 in a similar manner.

The structural-member assembled body 80 was placed in a manner such that the longitudinal direction of the structural-member assembled body 80 described above is the vertical direction, and the end portion on the impact application side of the structural-member assembled body 80 faces upwards. Then, an impact test was performed such that a falling weight of 300 kg located above the end portion on the impact application side of the structural-member assembly body 80 was caused to fall from a height of 2 m. At this time, the energy inputted to the structural-member assembled body 80 by the falling weight was 5880 J.

At the time of the impact test, a load measuring unit (load cell) was placed immediately below the structural-member assembled body 80 to measure a load history after the falling weight was brought into contact with the structural-member assembled body 80. At the same time, the displacement history (time history of the amount of descent of the falling weight after the falling weight was brought into contact with the structural-member assembled body 1) of the falling weight after the falling weight was brought into contact with the structural-member assembled body 80 was measured with a laser displacement meter. On the basis of the load history and the displacement history measured as described above, the absorbing energy of the structural-member assembled body 1 was calculated by integrating a load-displacement curve from the time when the falling weight was brought into contact with the structural-member assembled body 80 to the time when the falling weight was displaced by 50 mm downward in the vertical direction. The absorbing energy of Comparative Example 1 was 1920 J.

Further, the total length of the structural-member assembled body 80 in the longitudinal direction after the impact test was measured, and the amount of crumple was calculated by subtracting the total length of the structural-member assembled body 80 in the longitudinal direction after the impact test from the total length (344 mm) of the structural-member assembled body 80 in the longitudinal direction before the impact test. The amount of crumple of Comparative Example 1 was 155 mm. After the impact test, the structural-member assembled body 80 folded at the curved portions between the central portion and both of the end portions described above.

[Example 1]

A laser thermal treatment with a carbon dioxide laser was applied to the impact-absorbing member 83 of Comparative Example 1 as described above. The laser output was set to 5 kW, and the thermal treatment rate was set to 15 m/min. The laser output and the thermal treatment rate in the laser thermal treatment were not changed throughout Examples and Comparative Examples below. In this Example, the laser thermal treatment was applied in one diagonal direction to portions illustrated as the thermal treated portions A in FIG 16, more specifically, was applied in one diagonal direction to each partial flat portions, where the partial flat portion is a quadrilateral portion of each flat portion located between adjacent vertical sections when the impact-absorbing member 93 was separated by vertical sections arranged in the longitudinal direction at L/2 intervals from the end portion 94a on the impact application side toward the end portion 94b on the impact application side.

Vickers hardness was measured at portions where the laser thermal treatment was applied. The Vickers hardness of the untreated impact-absorbing member 83 was 230, while the Vickers hardness at the impact-absorbing member 93 after the laser thermal treatment was 468, which confirms that quench hardening was sufficiently performed.

The impact test was performed to the structural-member assembled body 90 produced as described above in a similar manner to that in Comparative Example 1. As a result, the absorbing energy was 3916 J, the amount of crumple was 74 mm, and the structural-member assembled body 90 did not fold after the impact test.

[Comparative Example 2]

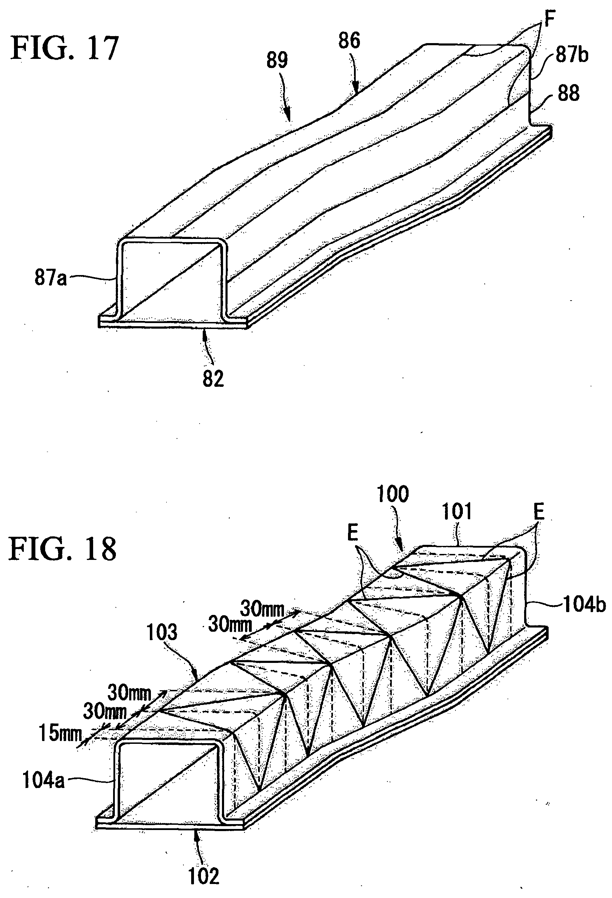

For the impact-absorbing member 83 of Comparative Example 1 described above, a laser thermal treatment was applied to portions illustrated as the thermally-treated portion F in FIG 17, more specifically, was applied in a straight manner to the widthwise central portion of each of the flat portions constituting the partial tubular body 88 of the impact-absorbing member 86 so as to extend in the longitudinal direction from the end portion 87a to the end portion 87b. The impact test was performed to the thus produced structural-member assembled body 89. As a results, the absorbing energy was 2058 J, the amount of crumple was 121 mm, and the structural-member assembled body 89 folded after the impact test.

[Comparative Example 3]

For the impact-absorbing member 83 of Comparative Example 1, the laser thermal treatment was applied to portions illustrated as the thermally-treated portion E in FIG. 18, more specifically, was applied in one diagonal direction of each partial flat portion, where the partial flat portion is a quadrilateral portion of each flat portion located between adjacent vertical sections when the impact-absorbing member 103 is separated by vertical sections arranged in the longitudinal direction at L/2 intervals from a vertical section spaced away by L/4 in the longitudinal direction from the end portion 104a on the impact application side toward the end portion 104b on the impact application side. The impact test was performed to the structural-member assembled body 100 produced as described above. As a result, the absorbing energy was 3815 J, the amount of crumple was 80 mm, and the structural-member assembled body 100 did not fold after the impact test.

[Comparative Example 4]

In Comparative Example 1 described above, a steel sheet was MIG welded to the end portion 84b on the impact application side of the impact-absorbing member 83. However, in Comparative Example 4, the steel sheet was not welded to the end portion on the impact application side of the structural-member assembled body, and the end portion on the impact application side was set to be a free end. The impact test was performed to the structural-member assembled body produced as described above. As a result, the absorbing energy was 2011 J, the amount of crumple was 161 mm, and the structural-member assembled body 1 folded after the impact test.

[Example 2]

A laser thermal treatment was applied to the impact-absorbing member of Comparative Example 4 described above. The laser thermal treatment was applied to portions illustrated as the thermally-treated portion E in FIG 18. More specifically, the thermal treatment with laser light was applied in one diagonal direction of each partial flat portion, where the partial flat portion is a quadrilateral portion of each flat portion located between adjacent vertical sections when the impact-absorbing member 103 is separated by vertical sections arranged in the longitudinal direction at L/2 intervals from a vertical section spaced away by L/4 in the longitudinal direction from the end portion 104a on the impact application side. The impact test was performed to the structural-member assembled body 100 produced as described above. As a result, the absorbing energy was 3921 J, the amount of crumple was 74 mm, and the structural-member assembled body 100 did not fold after the impact test.

[Comparative Example 5]

For the impact-absorbing member of Comparative Example 4 described above, the laser thermal treatment was applied to portions illustrated as thermally-treated portion F in FIG. 17, more specifically, was applied in the straight manner to a widthwise central portion of each of the flat portions constituting the partial tubular body 88 of the impact-absorbing member 86 so as to extend in the longitudinal direction from the end portion 87a to the end portion 87b. The impact test was performed to the structural-member assembled body 89 produced as described above. As a result, the absorbing energy was 2018 J, the amount of crumple was 118 mm, and the structural-member assembled body 89 folded after the impact test.

[Comparative Example 6]

For the impact-absorbing member 10 of Comparative Example 3 described above, the laser thermal treatment was applied to portions illustrated as A in FIG. 16, more specifically, was applied in one diagonal direction of each partial flat portion, where the partial flat portion is a quadrilateral portion of each flat portion located between adjacent vertical sections when the impact-absorbing member 10 is separated by vertical sections arranged in the longitudinal direction at L/2 intervals from the end portion on the impact application side. The impact test was performed to the structural-member assembled body 1 produced as described above. As a result, the absorbing energy was 3795 J, the amount of crumple was 81 mm, and the structural-member assembled body 1 did not fold after the impact test.

[Example 3]

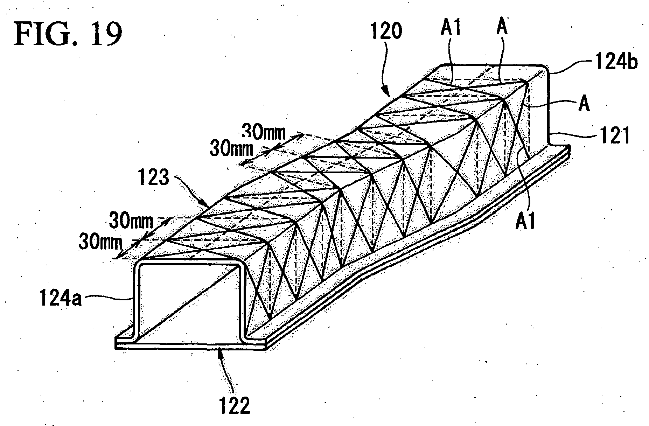

For the impact-absorbing member 83 of Comparative Example 1 described above, the laser thermal treatment was applied to portions illustrated as thermally-treated portions A and A1 in FIG. 19, more specifically, was applied in both diagonal directions of each partial flat portion, where the partial flat portion is a quadrilateral portion of each flat portion located between adjacent vertical sections when the impact-absorbing member 10 is separated by vertical sections arranged in the longitudinal direction at L/2 intervals from the end portion 124a on the impact application side toward the end portion 124b on the impact application side 124b. The impact test was performed to the structural-member assembled body 120 produced as described above. As a result, the absorbing energy was 4350 J, the amount of crumple was 58 mm, and the structural-member assembled body 1 did not fold after the impact test.

Table 1 provides a summary of the results.

[Table 1]

| Test results | | | | | |
|---|---|---|---|---|---|
| | Test condition | | Absorbing energy [J] | Amount of crumple [mm] | Occurrence of folding |
| | Thermally treated portion | Longitudinal end portion | | | |
| Comparative Example 1 | - | Fixed end | 1920 | 155 | Exist |
| Example 1 | Portion illustrated in FIG. 16 | | 3916 | 74 | Not exist |
| Comparative Example 2 | Portion illustrated in FIG. 17 | | 2058 | 121 | Exist |
| Comparative Example 3 | Portion illustrated in FIG. 18 | | 3815 | 80 | Not exist |
| Comparative Example 4 | - | Free end | 2011 | 161 | Exist |
| Example 2 | Portion illustrated in FIG. 18 | | 3921 | 74 | Not exist |
| Comparative Example 5 | Portion illustrated in FIG. 17 | | 2018 | 118 | Exist |
| Comparative Example 6 | Portion illustrated in FIG. 16 | | 3795 | 81 | Not exist |
| Example 3 | Portion illustrated in FIG. 19 | Free end | 4350 | 58 | Not exist |

From Table 1, it can be understood that, in the case where the steel sheet is welded to the end portion on the impact application side, in other words, in the case where the end portion on the impact application side is a fixed end, the impact-absorbing member 93 of Example 1 illustrated in FIG. 16 exhibits increased absorbing energy and reduced amount of crumple at the time when impact is applied, as compared with the impact-absorbing member 86 of Comparative Example 2 illustrated in FIG 17 and the impact-absorbing member 103 of Comparative Example 3 illustrated in FIG 18. More specifically, the impact-absorbing member 93 including the partial flat portions having the laser thermal treatment applied thereto in one diagonal direction, where the partial flat portion is a quadrilateral portion of each flat portion located between adjacent vertical sections when the impact-absorbing member 93 is separated by vertical sections arranged in the longitudinal direction at L/2 intervals from the end portion on the impact application side, exhibits increased absorbing energy and reduced amount of crumple at the time of receiving impact, as compared with the impact-absorbing member 86 in which the widthwise center of each of the flat portions has the laser thermal treatment applied thereto in the straight manner such that the applied laser thermal treatment extends in the longitudinal direction from the end portion to the other end portion, and the impact-absorbing member 103 including partial flat portions having the laser thermal treatment applied thereto in one diagonal direction of each of the partial flat portions, where the partial flat portion is a quadrilateral portion of each of the flat portions located between adjacent vertical sections when the impact-absorbing member is separated by vertical sections arranged in the longitudinal direction at L/2 intervals from a vertical section spaced away by L/4 in the longitudinal direction from the end portion on the impact application side.

Further, from Table 1, it can be understood that, in the case where the steel sheet is not welded to the end portion on the impact application side, in other words, in the case where the end portion on the impact application side is the free end, the impact-absorbing member 103 of Example 2 illustrated in FIG 18 exhibits increased absorbing energy and reduced amount of crumple at the time when the impact load is applied, as compared with the impact-absorbing member 86 of Comparative Example 5 illustrated in FIG. 17 and the impact-absorbing member 93 of Comparative Example 6 illustrated in FIG 16. More specifically, the impact-absorbing member 103 including partial flat portions having the laser thermal treatment applied thereto in one diagonal direction of each of the partial flat portions, where the partial flat portion is a quadrilateral portion of each of the flat portions located between adjacent vertical sections when the impact-absorbing member 103 is separated by vertical sections arrange in the longitudinal direction at L/2 intervals from a vertical section spaced away by L/4 in the longitudinal direction from the end portion on the impact application side, exhibits increased absorbing energy and reduced amount of crumple at the time when impact load is applied, as compared with the impact-absorbing member 86 in which the widthwise center of each of the flat portions has the laser thermal treatment applied thereto in the straight manner such that the applied laser thermal treatment extends in the longitudinal direction from the end to the other end, and the impact-absorbing member 93 including partial flat portions having the laser thermal treatment applied thereto in one diagonal direction of each of the partial flat portions, where the partial flat portion is a quadrilateral portion of each of the flat portions located between adjacent vertical sections when the impact-absorbing member 93 is separated by vertical sections arrange in the longitudinal direction at L/2 intervals from the end portion on the impact application side.

Yet further, it can be understood that the impact-absorbing member including the partial flat portions having the laser thermal treatment applied thereto in both diagonal directions of each of the partial flat portion exhibits increased absorbing energy and reduced amount of crumple at the time when impact load is applied, as compared with the impact-absorbing member including the partial flat portions having the laser thermal treatment applied thereto only in one diagonal direction (Example 3).

[Sixth Embodiment]

Next, with reference to the attached drawings, a six embodiment of the present invention will be described.

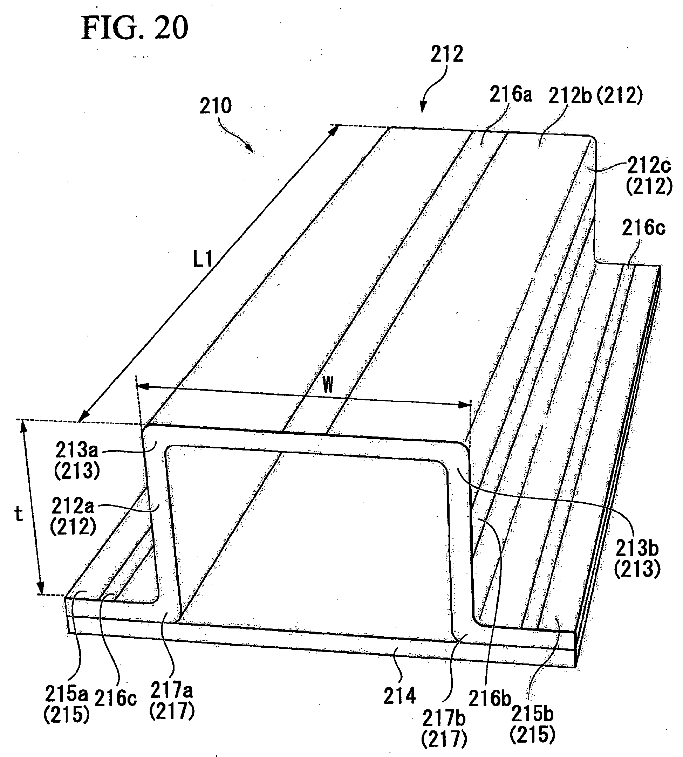

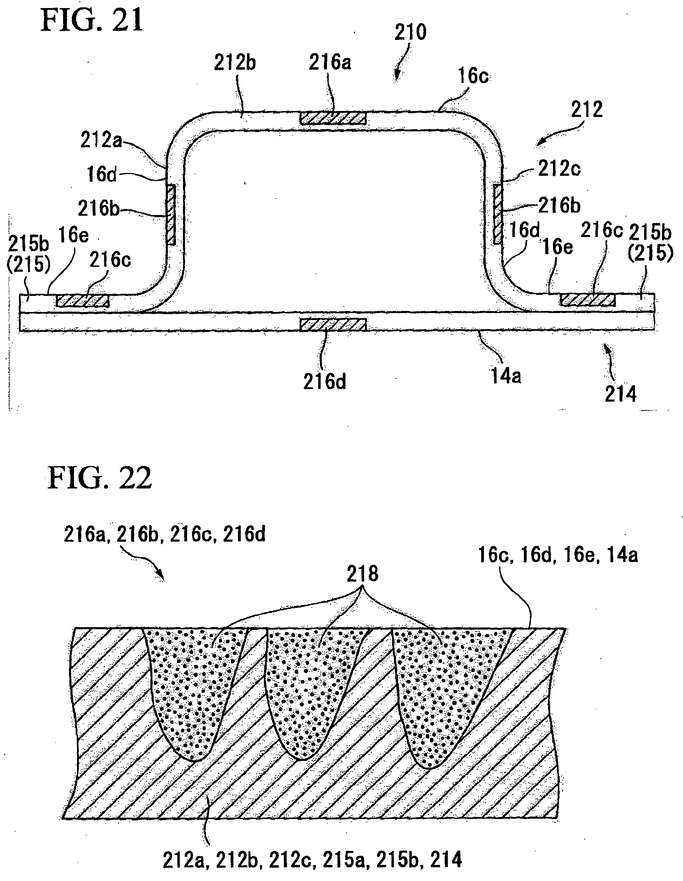

FIG. 20 and FIG. 21 illustrate an impact-absorbing member 210 applicable to a front side member, a rear side member or other members of a passenger vehicle as a formed item to which the present invention is applied. The impact-absorbing member 210 includes a first steel sheet (partial tubular body) 212 and a flange portion 215. The first steel sheet 212 is formed through press working or roll forming so as to protrude upwardly in a rectangular shape in FIG 20 and FIG. 21. The flange portion 215 includes flange portions 215a and 215b extending in the side direction from the first steel sheet 212. The impact-absorbing member 210 is formed into a hat-like cross-sectional shape when viewed in a direction perpendicular to the direction to which the impact-absorbing member 210 extends.

The first steel sheet 212 is spot welded to the second steel sheet 214 at the flange portions 215a and 215b.

In this embodiment, the first steel sheet 212 includes plural planer flat portions 212a to 212c, and plural corner portions (ridge portion) 213 and 217 provided between the flat portions 212a to 212c. In the example illustrated in FIG 20, the comer portion 213 includes two comer portions 213a and 213b, and the corner portion 217 includes two comer portions 217a and 217b. The flat portion 212a and the flange portion 215 are connected by way of the corner portion 217a, and the flat portion 212c and the flange portion 215 are connected by way of the corner portion 217b.

The impact-absorbing member 210 has one or more thermally-treated portions 216a, 216b, 216c, 216d formed through hardening with laser light in a manner such that the thermally-treated portions extend along the longitudinal direction (extending direction) of at least one flat portion of the planar flat portions 212a to 212c and the flange portion 215. The thermally-treated portion 216a is formed on the upper surface (surface) 16c of the flat portion 212b, the thermally-treated portion 216b is formed on the side surface (surface) 16d of the flat portion 212a, 212c, and the thermally-treated portion 216d is formed on the bottom surface (surface) 14a of the second steel sheet 214. Further, it may be possible to form the thermally-treated portion 216c on the upper surface 16e of the flange portion 215a, 215b. The at least one thermally-treated portion 216a, 216b, 216c, 216d is provided so as to extend in the longitudinal direction along the central line of the flat portions 212a to 212c, the flange portions 215a and 215b, and the second steel sheet 214. However, the present invention is not limited to this configuration. The at least one thermally-treated portion may be arranged so as to be positionally shifted to one side of either edge portion of each of the flat portions 212a to 212c, the flange portions 215a and 215b, and the second steel sheet 214. Yet further, it is only necessary that the thermally-treated portion is formed along the longitudinal direction of at least one flat portion of the plural flat portions 212a to 212c. Yet further, the thermally-treated portion 216a, 216b, 216c, 216d may be formed in one thermally hardened area extending along the longitudinal direction of the impact-absorbing member 210. Preferably, as illustrated in FIG. 22, plural thermally hardened areas 218 are included. Yet further, preferably, the intensity of the laser light and the time period for emission of the laser light are set so that the thermally hardened area 218 has a depth of 3/4 the plate thickness from the surfaces 16c, 16d, 16e, and 14a of the flat portions 212a to 212c, the flange portions 215a and 215b, and the second steel sheet 214. Noted that the thermally hardened area 218 is defined as an area having a hardness higher than a reference hardness given by the following expression (1).

$$0.8 \times (884C(1 - 0.3C^2) + 294) \cdots \text{Expression (1),}$$

where C is the amount of carbon contained (weight %).

Further, in the case where the thermally-treated portion includes plural thermally hardened areas 218, it is desirable to first form one thermally hardened area 218, form the next thermally hardened area 218 so as not to be adjacent to the thermally hardened area that has been formed, and sequentially, form the next thermally hardened area 218 in an area that is not adjacent to the newly formed thermally hardened area 218, thereby preventing the thermally hardened area 218 that has been already formed from being annealed by heat caused by forming the new thermally hardened area 218.

Next, the results of crumple tests on the impact-absorbing member 210 formed as described above will be described.

As a test material, a steel sheet with a 440 MPa class having a thickness of 1.6 mm was used to form the impact-absorbing member 210 having a height t of 50 mm, a width w of 70 mm, a length L1 of 300 mm, and a hat-like cross-sectional shape as illustrated in FIG. 20 and FIG. 21. Table 2 shows material characteristics of the steel sheet used for forming the impact-absorbing member 210.

[Table 2]

| Type of steel | t [mm] | Mechanical characteristics | | | Component | | |
|---|---|---|---|---|---|---|---|
| | | Yield stress [MPa] | Tensile Strength [MPa] | Elongation [%] | C [%] | Si [%] | Mn [%] |
| Steel material with 440 MPa class | 1.6 | 301 | 457 | 39 | 0.09 | 0.02 | 1.27 |

In this test, the laser light was emitted under the conditions: an output of 5 kW, and a processing speed of, in other words, a speed at which a spot of the laser light was moved on the impact-absorbing member 10 of 12 m/min.

Next, Vickers hardness was measured for the thermally-treated portions that were hardened with the laser light. As compared with Vickers hardness before hardening of 140, Vickers hardness was 306 after hardening. Thus, quench hardening was sufficiently performed.

Deformation of the impact-absorbing member 210 formed as described above was observed by placing the impact-absorbing member 210 in a position such that the longitudinal direction of the impact-absorbing member 210 is in the vertical direction, and falling an impact member (not illustrated) from above the impact-absorbing member 210 to bring the impact member into collision with the upper end of the impact-absorbing member 210. More specifically, a falling weight of 300 kg is fallen from a height of 2 m to bring the falling weight into collision with the upper end of the structural member, and the deformation of the structural member was observed. Then, the absorbing energy was calculated as an evaluation value of the impact-absorbing ability by integrating a load-displacement curve from a time when the falling weight is brought into contact with the structural member to a time when the structural member deforms 30 mm. As a result, the impact-absorbing energy in this Example was 2256 J (joule), whereas the impact-absorbing energy in the case where laser hardening was not performed was 2079 J.

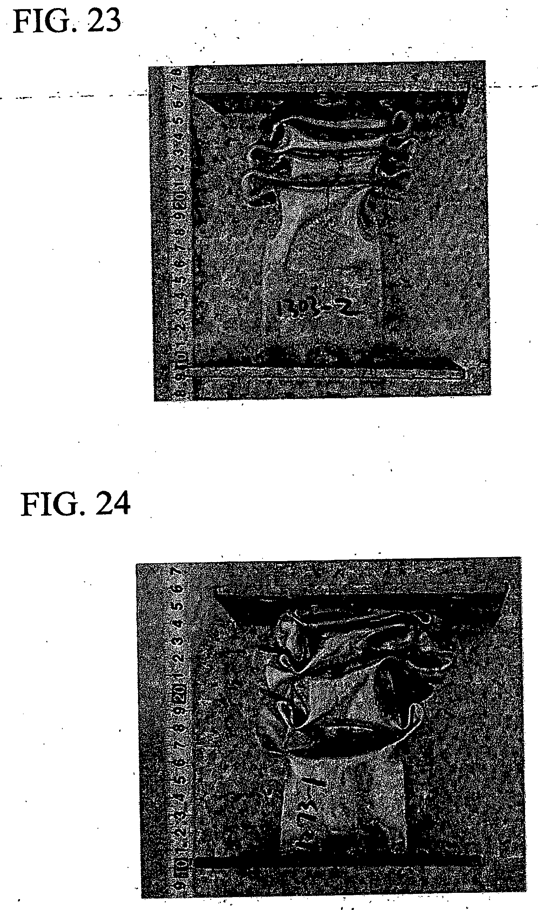

FIG 23 and FIG. 24 are photographs showing deformation of the impact-absorbing member 210 caused by the impact test. In FIG 23, local folding does not occur in the impact-absorbing member 210, and the impact-absorbing energy 210 deforms in a manner such that ridges and grooves are regularly formed on the entire impact-absorbing member. This type of crumple is called the compact mode. On the other hand, in the impact-absorbing member 210 shown in FIG 24, as folding occurs locally, the buckled portion contains a flat portion that does not contribute to deformation. This type of crumple is called the non-compact mode. In the non-compact mode, a straight portion does not contribute to deformation, and does not absorb the impact energy. Thus, the absorbing energy is significantly small as compared with that in the compact mode.

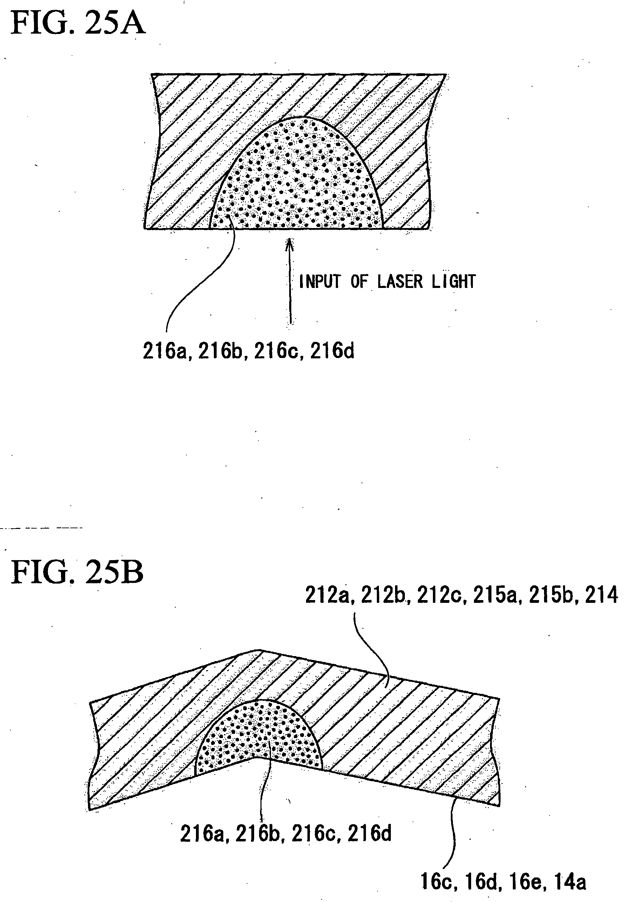

As illustrated in FIG. 25A, by forming the thermally-treated portion 216a, 216b, 216d at the flat portion with the laser light, the thermally-treated portion 216a, 216b, 216d distort, which leads to deformation of the steel sheet in a form that it bends toward the front surface side of the laser light with the thermally-treated portion 216a, 216b, 216d being the center as illustrated in FIG 25B. More specifically, it was observed that distortion occurs at the thermally-treated portion, and the member having the thermally hardened area formed up to the depth of 1/2 to 3/4 the plate thickness from the surface 16c, 16d, 14a of the flat portion 212a to 212c and the second steel sheet 214 deforms (bends) as illustrated in the drawing. This is because the laser-hardened area is subjected to a tensile stress due to contraction after melting. More specifically, in the case where hardening was applied shallower than the depth of 1/2 the plate thickness from the surface 16c, 16d, 14a of the flat portion 212a to 212c and the second steel sheet 214, the tensile stress due to contraction after the melting is low, and the occurring distortion is small, so that the deformation as illustrated in FIG 25B is less likely to occur. On the other hand, in the case where the hardening is applied deeper than the depth of 3/4 the plate thickness, the tensile stress acts on the front surface as well as the rear surface of the surface 16c, 16d, 14a of the flat portion 212a to 212c and the second steel sheet 214, so that the deformation as illustrated in FIG 25B is less likely to occur. Thus, in order to achieve the effect described above, it is desirable to apply the laser hardening at a depth of not less than 1/2 and not more than 3/4 the plate thickness from the surface 16c, 16d, 14a. Further, it is desirable to apply hardening to the surface 16e of the flange portion 215a, 215b so as to reach a similar depth.

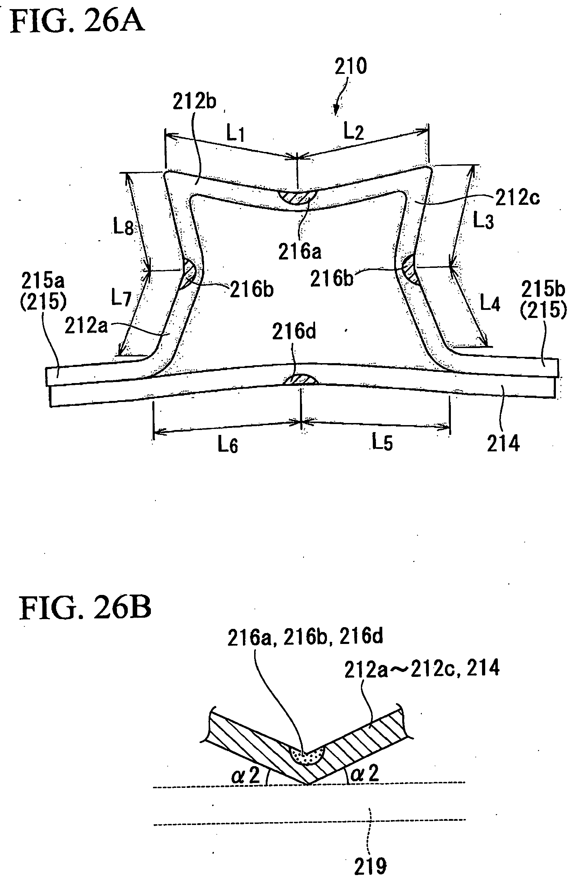

As illustrated in FIG. 21, in the case where the laser hardening as described above is applied to, as the flat portion, the upper surface 16c and both of the side surfaces 16d of the first steel sheet 212, the upper surface 1 de of the flange portion 215, and the bottom surface 14a of the second steel sheet 214, the impact-absorbing member 210 deforms (bends) toward the center as illustrated in FIG 26A. In FIG 26B, the broken line indicates the flat portions and the second steel sheet 219 before the thermal treatment, whereas the sold line indicates the flat portions 212a to 212c and the second steel sheet 214 after the thermal treatment. As illustrated in FIG 26B, an angle $\alpha2$ (deformation angle of the thermally-treated portion 216a, 216b, 216d) formed by the flat portion and the second steel sheet 219 with the flat portions 212a to 212c and the second steel sheet 214 is not less than 0.1 degrees and not more than 3. 0 degrees. Preferably, the deformation occurs in the angle of not less than 0.1 degrees and not more than 0.6 degrees.

It should be noted that, in FIG 26A and FIG 26B, the deformation of each of the flat portions is exaggeratedly illustrated. As illustrated in FIG 26A and FIG 26B, with the laser hardening, the impact-absorbing member 210 is formed in a shape such that the number of ridge lines (comer portions of the impact-absorbing member 210) increases, and the average side lengths L given by the following expression becomes smaller than that before the laser hardening.

$$L = \Sigma Li/(j + k),$$

where

Li: distance between ridge lines
j: the number of ridge lines on the impact-absorbing member 210 before the laser hardening
k: the number of laser hardening.

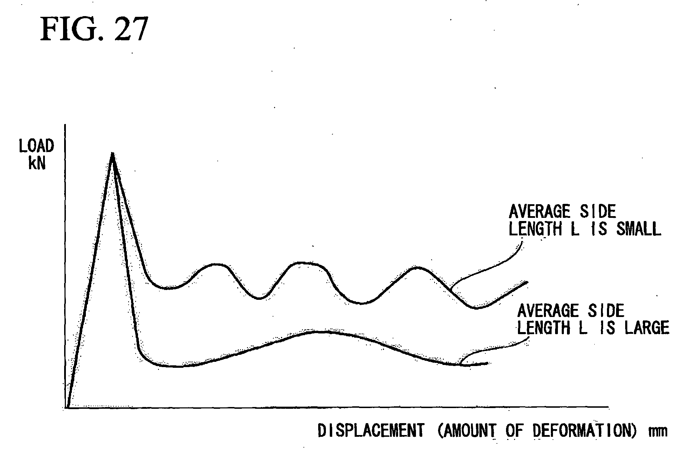

As the average side length L decreases, the buckling wavelength at the time of crumpling becomes shorter as illustrated in FIG 27. This makes the compact mode more likely to occur, which leads to an increase in the absorbing energy. Thus, according to this embodiment, in conjunction with the increase in the yield stress of the thermally-treated portion subjected to the laser hardening, the flat portion deforms, which makes it possible to effectively enhance the strength of the impact-absorbing member 210 and increase the absorbing energy.

Further, in this embodiment, a description has been made of the configuration in which the thermally-treated portions are formed on all the flat portions. However, it is only necessary that the thermally-treated portion is formed on at least one flat portion.

The technical scope of the present invention is not limited to the first embodiment to the sixth embodiment described above, and it may be possible to apply various modifications to the above-described embodiments within the scope of the present invention. In other words, specific structures and shapes illustrated in the embodiments are merely examples, and various modifications may be possible depending on applications.

Reference Signs List.

1 Structural-member assembled body
10 Impact-absorbing member
11 Partial tubular body
12 Flat portion
13 Comer portion
14 Longitudinal end portions
14a Bottom surface (second steel sheet)
15 Flange portion
16 Flat portion
16c Upper surface (flat portion)

16d Side surface (flat portion)
16e Upper surface (flange portion)
17 Corner portion
19 Partial flat portion
20 Additional structural member
210 Impact-absorbing member
212 First steel sheet
214 Second steel sheet
215 Flange portion
216a Thermally-treated portion
216b Thermally-treated portion
216c Thermally-treated portion
216d Thermally-treated portion
218 Thermally hardened area

**Claims**

1. An assembled body (1) including an impact-absorbing member (10) and a structural member (20),
the impact absorbing member (10) comprising a partial tubular body (11) having a polygonal shape with one open side in a cross-section perpendicular to a longitudinal direction of the partial tubular body (11) and a flange portion (15); and
the structural member (20) having a plate-like shape and being placed so as to face the flange portion (15) of the impact-absorbing member (10) and to close the open side of the polygonal shape in the cross-section of the partial tubular body (11),
wherein the partial tubular body (11) includes:

   a plurality of flat portions (12); and
   a plurality of corner portions (13) provided between the flat portions (12), wherein:

      at least one of the plurality of flat portions (12) has a thermally-treated portion (A) formed by applying a thermal treatment with a laser light so as to deform at an angle of not less than 0.1 degrees and not more than 3.0 degrees;
      each of the flat portions (12) is separated into a plurality of quadrilateral partial flat portions (19) adjacent to each other when the partial tubular body (11) is divided by sections perpendicular to the longitudinal direction arranged in the longitudinal direction at L/2 intervals from a vertical section located at a predetermined position along the longitudinal direction from an end portion in the longitudinal direction of the partial tubular body (11), where L is an average side length of all the sides constituting the polygonal shape with one open side at the end portion;
      the thermally-treated portion (A) is formed along at least one diagonal direction of at least one quadrilateral partial flat portion (19) of the plurality of quadrilateral partial flat portions (19); and
      the thermally-treated portion (A) is provided to at least two quadrilateral partial flat portions (19) adjacent to each other of the plurality of quadrilateral partial flat portions (19) so as to be symmetric with respect to a boundary line between the adjacent quadrilateral partial flat portions (19).

2. The assembled body according to claim 1, wherein the predetermined position is located at the end portion.

3. The assembled body according to claim 1, wherein the predetermined position is located at L/4 from the end portion along the longitudinal direction.

4. The assembled body according to any one of claims 1 to 3, wherein
two thermally-treated portions (A) are formed along both diagonal directions of at least one quadrilateral partial flat portion (19) of the plurality of quadrilateral partial flat portions (19).

5. The assembled body according to any one of claims 1 to 3, wherein
a second thermally-treated portion (B) is formed on the plurality of corner portions (13) by applying a thermal treatment with a laser light along the longitudinal direction of the partial tubular body (11).

**6.** The assembled body according to any one of claims 1 to 3, wherein
a third thermally-treated portion (C) is formed along the longitudinal direction of at least one flat portion (12) of the plurality of flat portions (12).

**7.** The assembled body according to claim 6, wherein
the third thermally-treated portion (C) is formed with a plurality of laser lights along the longitudinal direction.

**8.** The assembled body according to claim 6, wherein
the third thermally-treated portion (C) is formed so as to reach a depth of not more than three-quarter of a plate thickness of the flat portion (12) from a surface of the
flat portion (12).

**9.** The assembled body according to claim 6, wherein
the third thermally-treated portion (C) is formed so as to reach a depth of not less than 1/2 of a plate thickness of the flat portion (12) from a surface of the flat portion (12).

**10.** An impact-absorbing member (50) comprising a partial tubular body (51) having a polygonal shape with one open side in a cross-section perpendicular to a longitudinal direction of the partial tubular body (51) and a flat portion (26) that closes the open side of the partial tubular body (51);
wherein the partial tubular body (51) includes:

a plurality of flat portions (12); and
a plurality of corner portions (13) provided between the flat portions (12), wherein:

at least one of the plurality of flat portions (12) has a thermally-treated portion (A) formed by applying a thermal treatment with a laser light so as to deform at an angle of not less than 0.1 degrees and not more than 3.0 degrees;
each of the flat portions (12) is separated into a plurality of quadrilateral partial flat portions (19) adjacent to each other when the partial tubular body (11) is divided by sections perpendicular to the longitudinal direction arranged in the longitudinal direction at L/2 intervals from a vertical section located at a predetermined position along the longitudinal direction from an end portion in the longitudinal direction of the partial tubular body (11), where L is an average side length of all the sides constituting the polygonal shape with one open side at the end portion;
the thermally-treated portion (A) is formed along at least one diagonal direction of at least one quadrilateral partial flat portion (19) of the plurality of quadrilateral partial flat portions (19); and
the thermally-treated portion (A) is provided to at least two quadrilateral partial flat portions (19) adjacent to each other of the plurality of quadrilateral partial flat portions (19) so as to be symmetric with respect to a boundary line between the adjacent quadrilateral partial flat portions (19).

**11.** The impact-absorbing member according to claim 10, wherein the predetermined position is located at the end portion.

**12.** The impact-absorbing member according to claim 10, wherein the predetermined position is located at L/4 from the end portion along the longitudinal direction.

**13.** The impact-absorbing member according to any one of claims 10 to 12, wherein
two thermally-treated portions (A) are formed along both diagonal directions of at least one quadrilateral partial flat portion (19) of the plurality of quadrilateral partial flat portions (19).

**14.** The impact-absorbing member according to any one of claims 10 to 12, wherein
a second thermally-treated portion (B) is formed on the plurality of corner portions (13) by applying a thermal treatment with a laser light along the longitudinal direction of the partial tubular body (11).

**15.** The impact-absorbing member according to any one of claims 10 to 12, wherein
a third thermally-treated portion (C) is formed along the longitudinal direction of at least one flat portion (12) of the plurality of flat portions (12).

**16.** The impact-absorbing member according to claim 15, wherein
the third thermally-treated portion (C) is formed with a plurality of laser lights along the longitudinal direction.

**17.** The impact-absorbing member according to claim 15, wherein
the third thermally-treated portion (C) is formed so as to reach a depth of not more than three-quarter of a plate thickness of the flat-portion (12) from a surface of the flat portion (12).

**18.** The impact-absorbing member according to claim 15, wherein
the third thermally-treated portion (C) is formed so as to reach a depth of not less than 1/2 of a plate thickness of the flat portion (12) from a surface of the flat portion (12).

**Patentansprüche**

**1.** Zusammengebauter Körper (1) mit einem Stoßdämpfungsbauteil (10) und einem Strukturbauteil (20), wobei das Stoßdämpfungsbauteil (10) einen Teilröhrenkörper (11), der eine Polygonform mit einer offenen Seite in einem Querschnitt senkrecht zu einer Längsrichtung des Teilröhrenkörpers (11) hat, und einen Flanschabschnitt (15) aufweist; und das Strukturbauteil (20) eine plattenartige Form hat und so platziert ist, dass es zum Flanschabschnitt (15) des Stoßdämpfungsbauteils (10) weist und die offene Seite der Polygonform im Querschnitt des Teilröhrenkörpers (11) verschließt,
wobei der Teilröhrenkörper (11) aufweist:

mehrere Flachabschnitte (12); und
mehrere Eckenabschnitte (13), die zwischen den Flachabschnitten (12) vorgesehen sind, wobei:

mindestens einer der mehreren Flachabschnitte (12) einen wärmebehandelten Abschnitt (A) hat, der durch Anwenden einer Wärmebehandlung mit Laserlicht so gebildet ist, dass er sich in einem Winkel von mindestens 0,1 Grad und höchstens 3,0 Grad verformt;
jeder der Flachabschnitte (12) in mehrere vierseitige Teilflachabschnitte (19) getrennt ist, die benachbart zueinander sind, wenn der Teilröhrenkörper (11) durch Schnitte senkrecht zur Längsrichtung aufgeteilt ist, die in Längsrichtung in L/2-Intervallen von einem senkrechten Schnitt angeordnet sind, der an einer vorbestimmten Position entlang der Längsrichtung von einem Endabschnitt in Längsrichtung des Teilröhrenkörpers (11) liegt, wobei L eine mittlere Seitenlänge aller Seiten ist, die die Polygonform mit einer offenen Seite am Endabschnitt bilden;
der wärmebehandelte Abschnitt (A) entlang mindestens einer Diagonalrichtung mindestens eines vierseitigen Teilflachabschnitts (19) der mehreren vierseitigen Teilflachabschnitte (19) gebildet ist; und
der wärmebehandelte Abschnitt (A) an mindestens zwei zueinander benachbarten vierseitigen Teilflachabschnitten (19) der mehreren vierseitigen Teilflachabschnitte (19) so vorgesehen ist, dass er symmetrisch im Hinblick auf eine Grenzlinie zwischen den benachbarten vierseitigen Teilflachabschnitten (19) ist.

**2.** Zusammengebauter Körper nach Anspruch 1, wobei die vorbestimmte Position am Endabschnitt liegt.

**3.** Zusammengebauter Körper nach Anspruch 1, wobei die vorbestimmte Position bei L/4 vom Endabschnitt in Längsrichtung liegt.

**4.** Zusammengebauter Körper nach einem der Ansprüche 1 bis 3, wobei
zwei wärmebehandelte Abschnitte (A) entlang beiden Diagonalrichtungen mindestens eines vierseitigen Teilflachabschnitts (19) der mehreren vierseitigen Teilflachabschnitte (19) gebildet sind.

**5.** Zusammengebauter Körper nach einem der Ansprüche 1 bis 3, wobei
ein zweiter wärmebehandelter Abschnitt (B) auf den mehreren Eckenabschnitten (13) durch Anwenden einer Wärmebehandlung mit Laserlicht in Längsrichtung des Teilröhrenkörpers (11) gebildet ist.

**6.** Zusammengebauter Körper nach einem der Ansprüche 1 bis 3, wobei
ein dritter wärmebehandelter Abschnitt (C) in Längsrichtung mindestens eines Flachabschnitts (12) der mehreren Flachabschnitte (12) gebildet ist.

**7.** Zusammengebauter Körper nach Anspruch 6, wobei
der dritte wärmebehandelte Abschnitt (C) mit mehreren Laserlichtstrahlen in Längsrichtung gebildet ist.

**8.** Zusammengebauter Körper nach Anspruch 6, wobei

der dritte wärmebehandelte Abschnitt (C) so gebildet ist, dass er eine Tiefe von höchstens drei Viertel einer Plattendicke des Flachabschnitts (12) von einer Oberfläche des Flachabschnitts (12) erreicht.

9. Zusammengebauter Körper nach Anspruch 6, wobei
der dritte wärmebehandelte Abschnitt (C) so gebildet ist, dass er eine Tiefe von mindestens 1/2 einer Plattendicke des Flachabschnitts (12) von einer Oberfläche des Flachabschnitts (12) erreicht.

10. Stoßdämpfungsbauteil (50), das einen Teilröhrenkörper (51), der eine Polygonform mit einer offenen Seite in einem Querschnitt senkrecht zu einer Längsrichtung des Teilröhrenkörpers (51) hat, und einen Flachabschnitt (26) aufweist, der die offene Seite des Teilröhrenkörpers (51) verschließt;
wobei der Teilröhrenkörper (51) aufweist:

mehrere Flachabschnitte (12); und
mehrere Eckenabschnitte (13), die zwischen den Flachabschnitten (12) vorgesehen sind, wobei:

mindestens einer der mehreren Flachabschnitte (12) einen wärmebehandelten Abschnitt (A) hat, der durch Anwenden einer Wärmebehandlung mit Laserlicht so gebildet ist, dass er sich in einem Winkel von mindestens 0,1 Grad und höchstens 3,0 Grad verformt;
jeder der Flachabschnitte (12) in mehrere vierseitige Teilflachabschnitte (19) getrennt ist, die benachbart zueinander sind, wenn der Teilröhrenkörper (11) durch Schnitte senkrecht zur Längsrichtung aufgeteilt ist, die in Längsrichtung in L/2-Intervallen von einem senkrechten Schnitt angeordnet sind, der an einer vorbestimmten Position entlang der Längsrichtung von einem Endabschnitt in Längsrichtung des Teilröhrenkörpers (11) liegt, wobei L eine mittlere Seitenlänge aller Seiten ist, die die Polygonform mit einer offenen Seite am Endabschnitt bilden;
der wärmebehandelte Abschnitt (A) in mindestens einer Diagonalrichtung mindestens eines vierseitigen Teilflachabschnitts (19) der mehreren vierseitigen Teilflachabschnitte (19) gebildet ist; und
der wärmebehandelte Abschnitt (A) an mindestens zwei zueinander benachbarten vierseitigen Teilflachabschnitten (19) der mehreren vierseitigen Teilflachabschnitte (19) so vorgesehen ist, dass er symmetrisch im Hinblick auf eine Grenzlinie zwischen den benachbarten vierseitigen Teilflachabschnitten (19) ist.

11. Stoßdämpfungsbauteil nach Anspruch 10, wobei die vorbestimmte Position am Endabschnitt liegt.

12. Stoßdämpfungsbauteil nach Anspruch 10, wobei die vorbestimmte Position bei L/4 vom Endabschnitt in Längsrichtung liegt.

13. Stoßdämpfungsbauteil nach einem der Ansprüche 10 bis 12, wobei
zwei wärmebehandelte Abschnitte (A) entlang beiden Diagonalrichtungen mindestens eines vierseitigen Teilflachabschnitts (19) der mehreren vierseitigen Teilflachabschnitte (19) gebildet sind.

14. Stoßdämpfungsbauteil nach einem der Ansprüche 10 bis 12, wobei
ein zweiter wärmebehandelter Abschnitt (B) auf den mehreren Eckenabschnitten (13) durch Anwenden einer Wärmebehandlung mit Laserlicht in Längsrichtung des Teilröhrenkörpers (11) gebildet ist.

15. Stoßdämpfungsbauteil nach einem der Ansprüche 10 bis 12, wobei
ein dritter wärmebehandelter Abschnitt (C) in Längsrichtung mindestens eines Flachabschnitts (12) der mehreren Flachabschnitte (12) gebildet ist.

16. Stoßdämpfungsbauteil nach Anspruch 15, wobei
der dritte wärmebehandelte Abschnitt (C) mit mehreren Laserlichtstrahlen in Längsrichtung gebildet ist.

17. Stoßdämpfungsbauteil nach Anspruch 15, wobei
der dritte wärmebehandelte Abschnitt (C) so gebildet ist, dass er eine Tiefe von höchstens drei Viertel einer Plattendicke des Flachabschnitts (12) von einer Oberfläche des Flachabschnitts (12) erreicht.

18. Stoßdämpfungsbauteil nach Anspruch 15, wobei
der dritte wärmebehandelte Abschnitt (C) so gebildet ist, dass er eine Tiefe von mindestens 1/2 einer Plattendicke des Flachabschnitts (12) von einer Oberfläche des Flachabschnitts (12) erreicht.

**Revendications**

1. Corps assemblé (1) comprenant un élément d'absorption d'impact (10) et un élément structurel (20), l'élément d'absorption d'impact (10) comportant un corps partiellement tubulaire (11) de forme polygonale avec un côté ouvert en section transversale perpendiculairement à la direction longitudinale du corps partiellement tubulaire (11) et une partie de bride (15) ; et

   l'élément structurel (20) étant en forme de plaque et étant disposé de manière à être opposé à la partie de bride (15) de l'élément d'absorption d'impact (10) et pour fermer le côté ouvert de la forme polygonale en section transversale du corps partiellement tubulaire (11), où le corps partiellement tubulaire (11) comporte :

   une pluralité de segments plats (12) ; et
   une pluralité de parties en coin (13) prévues entre les segments plats (12), où :

   au moins un segment de la pluralité de segments plats (12) présente une partie traitée thermiquement (A) formée par application d'un traitement thermique par une lumière laser de manière à se déformer suivant un angle supérieur ou égal à 0,1° et inférieur ou égal à 3,0° ;
   chaque segment plat (12) est partagé en une pluralité de segments plats quadrilatéraux partiels (19) adjacents l'un à l'autre lorsque le corps partiellement tubulaire (11) est divisé en sections perpendiculairement à la direction longitudinale, disposées dans la direction longitudinale à intervalle L/2 depuis une section verticale située à un emplacement défini dans la direction longitudinale, à partir d'un segment d'extrémité en direction longitudinale du corps partiellement tubulaire (11), L étant une longueur de côté moyenne pour tous les côtés constituant la forme polygonale avec un côté ouvert sur le segment d'extrémité ;
   la partie traitée thermiquement (A) est formée dans au moins une direction diagonale d'au moins un segment plat quadrilatéral partiel (19) de la pluralité des segments plats quadrilatéraux partiels (19) ; et
   la partie traitée thermiquement (A) est prévue sur au moins deux segments plats quadrilatéraux partiels (19) adjacents l'un à l'autre de la pluralité de segments plats quadrilatéraux partiels (19), de manière à être symétrique par rapport à une ligne de délimitation entre les segments plats quadrilatéraux partiels (19) adjacents.

2. Corps assemblé selon la revendication 1, où l'emplacement défini est situé sur le segment d'extrémité.

3. Corps assemblé selon la revendication 1, où l'emplacement défini est situé à L/4 du segment d'extrémité dans la direction longitudinale.

4. Corps assemblé selon l'une quelconque des revendications 1 à 3, où deux parties traitées thermiquement (A) sont formées dans les deux directions diagonales d'au moins un segment plat quadrilatéral partiel (19) de la pluralité de segments plats quadrilatéraux partiels (19).

5. Corps assemblé selon l'une quelconque des revendications 1 à 3, où une deuxième partie traitée thermiquement (B) est formée sur la pluralité de parties en coin (13) par application d'un traitement thermique par une lumière laser dans la direction longitudinale du corps partiellement tubulaire (11).

6. Corps assemblé selon l'une quelconque des revendications 1 à 3, où une troisième partie traitée thermiquement (C) est formée dans la direction longitudinale d'au moins un segment plat (12) de la pluralité de segments plats (12).

7. Corps assemblé selon la revendication 6, où la troisième partie traitée thermiquement (C) est formée par une pluralité de lumières laser dans la direction longitudinale.

8. Corps assemblé selon la revendication 6, où la troisième partie traitée thermiquement (C) est formée de manière à atteindre une profondeur inférieure ou égale aux ¾ d'une épaisseur de plaque du segment plat (12) depuis la surface du segment plat (12).

9. Corps assemblé selon la revendication 6, où la troisième partie traitée thermiquement (C) est formée de manière à atteindre une profondeur supérieure ou égale à la moitié d'une épaisseur de plaque du segment plat (12) depuis la surface du segment plat (12).

**10.** Elément d'absorption d'impact (50) comportant un corps partiellement tubulaire (51) de forme polygonale avec un côté ouvert en section transversale perpendiculairement à la direction longitudinale du corps partiellement tubulaire (51) et un segment plat (26) fermant le côté ouvert du corps partiellement tubulaire (51) ;

où le corps partiellement tubulaire (51) comporte :

une pluralité de segments plats (12) ; et
une pluralité de parties en coin (13) prévues entre les segments plats (12), où :

au moins un segment de la pluralité de segments plats (12) présente une partie traitée thermiquement (A) formée par application d'un traitement thermique par une lumière laser de manière à se déformer suivant un angle supérieur ou égal à 0,1° et inférieur ou égal à 3,0° ;
chaque segment plat (12) est partagé en une pluralité de segments plats quadrilatéraux partiels (19) adjacents l'un à l'autre lorsque le corps partiellement tubulaire (11) est divisé en sections perpendiculairement à la direction longitudinale, disposées dans la direction longitudinale à intervalle L/2 depuis une section verticale située à un emplacement défini dans la direction longitudinale, à partir d'un segment d'extrémité en direction longitudinale du corps partiellement tubulaire (11),
L étant une longueur de côté moyenne pour tous les côtés constituant la forme polygonale avec un côté ouvert sur le segment d'extrémité ;
la partie traitée thermiquement (A) est formée dans au moins une direction diagonale d'au moins un segment plat quadrilatéral partiel (19) de la pluralité des segments plats quadrilatéraux partiels (19) ; et
la partie traitée thermiquement (A) est prévue sur au moins deux segments plats quadrilatéraux partiels (19) adjacents l'un à l'autre de la pluralité de segments plats quadrilatéraux partiels (19), de manière à être symétrique par rapport à une ligne de délimitation entre les segments plats quadrilatéraux partiels (19) adjacents.

**11.** Elément d'absorption d'impact selon la revendication 10, où l'emplacement défini est situé sur le segment d'extrémité.

**12.** Elément d'absorption d'impact selon la revendication 10, où l'emplacement défini est situé à L/4 du segment d'extrémité dans la direction longitudinale.

**13.** Elément d'absorption d'impact selon l'une quelconque des revendications 10 à 12, où deux parties traitées thermiquement (A) sont formées dans les deux directions diagonales d'au moins un segment plat quadrilatéral partiel (19) de la pluralité de segments plats quadrilatéraux partiels (19).

**14.** Elément d'absorption d'impact selon l'une quelconque des revendications 10 à 12, où une deuxième partie traitée thermiquement (B) est formée sur la pluralité de parties en coin (13) par application d'un traitement thermique par une lumière laser dans la direction longitudinale du corps partiellement tubulaire (11).

**15.** Elément d'absorption d'impact selon l'une quelconque des revendications 10 à 12, où une troisième partie traitée thermiquement (C) est formée dans la direction longitudinale d'au moins un segment plat (12) de la pluralité de segments plats (12).

**16.** Elément d'absorption d'impact selon la revendication 15, où
la troisième partie traitée thermiquement (C) est formée par une pluralité de lumières laser dans la direction longitudinale.

**17.** Elément d'absorption d'impact selon la revendication 15, où
la troisième partie traitée thermiquement (C) est formée de manière à atteindre une profondeur inférieure ou égale aux ¾ d'une épaisseur de plaque du segment plat (12) depuis la surface du segment plat (12).

**18.** Elément d'absorption d'impact selon la revendication 15, où
la troisième partie traitée thermiquement (C) est formée de manière à atteindre une profondeur supérieure ou égale à la moitié d'une épaisseur de plaque du segment plat (12) depuis la surface du segment plat (12).

## FIG. 1A

## FIG. 1B

FIG. 2A

FIG. 2B

FIG. 2C

## FIG. 3A

## FIG. 3B

# FIG. 4

FIG. 5A

$\frac{3}{2}L$

$L$

12b

$\frac{L}{2}$

FIG. 5B

Y₂

Y₁

19

VI

Z

12b

VI

14

# FIG. 6

# FIG. 7

# FIG. 8

# FIG. 9

# FIG. 10

## FIG. 11

## FIG. 12

# FIG. 13A

# FIG. 13B

# FIG. 13C

# FIG. 13D

FIG. 14A

FIG. 14B

FIG. 15

FIG. 16

EP 2 565 489 B1

FIG. 17

89  86                    F

87b

88

87a

82

FIG. 18

100  101        E

E

103                      104b

30mm
30mm

30mm
30mm
15mm

104a

102

36

# FIG. 19

## FIG. 20

FIG. 21

FIG. 22

FIG. 23

FIG. 24

## FIG. 25A

INPUT OF LASER LIGHT

216a, 216b, 216c, 216d

## FIG. 25B

212a, 212b, 212c, 215a, 215b, 214

216a, 216b, 216c, 216d

16c, 16d, 16e, 14a

## FIG. 26A

## FIG. 26B

# FIG. 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010189737 A
- JP 2010189502 A
- JP S6199629 B
- JP H0472010 B
- JP H0673439 B
- JP 2004108541 A
- JP 201073422 B